# EUROPÄISCHE PATENTSCHRIFT

(11) **EP 4 049 014 B1**
(45) Veröffentlichungstag und Bekanntmachung des Hinweises auf die Patenterteilung: **01.07.2026**
(21) Anmeldenummer: 20800029.9
(22) Anmeldetag: 22.10.2020
(51) Int. Cl.: G01N 27/30, G01N 27/414, G01N 27/22

(54) **SENSOR MIT EINER FESTKÖRPER-SCHICHTSTRUKTUR UND VERFAHREN ZUR HERSTELLUNG DES SENSORS**
SENSOR WITH A SOLID-STATE LAYER STRUCTURE AND METHOD OF MANUFACTURING THE SENSOR
CAPTEUR AVEC UNE STRUCTURE DE COUCHE À L'ÉTAT SOLIDE ET PROCÉDÉ DE FABRICATION DU CAPTEUR

(30) Priorität: 23.10.2019 DE 102019216327
(43) Veröffentlichungstag der Anmeldung: 31.08.2022
(73) Patentinhaber: Fraunhofer-Gesellschaft zur Förderung der angewandten Forschung e.V., 80686 München (DE)
(72) Erfinder: KURTH, Eberhard, 01109 Dresden (DE); KUNATH, Christian, 01109 Dresden (DE)
(74) Vertreter: König, Andreas Rudolf
(86) Internationale Anmeldenummer: PCT/EP2020/079801
(87) Internationale Veröffentlichungsnummer: WO 2021/078888

(56) Entgegenhaltungen:
- DE-C1- 19 850 592
- GB-A- 1 071 068
- US-A1- 2001 032 784
- US-A1- 2014 264 467
- US-A1- 2017 160 226
- US-A1- 2017 234 861
- ZENG RUIXUE ET AL: "Modelling and characterization of novel reference-less semiconductor ion sensor for pH sensing", SENSORS AND ACTUATORS B: CHEMICAL, ELSEVIER BV, NL, vol. 281, 1 August 2018 (2018-08-01), pages 60 - 71, XP085575929, ISSN: 0925-4005, DOI: 10.1016/J.SNB.2018.07.175
- MATHIAS WIPF ET AL: "Selective Sodium Sensing with Gold-Coated Silicon Nanowire Field-Effect Transistors in a Differential Setup", ACS NANO, vol. 7, no. 7, 23 July 2013 (2013-07-23), pages 5978 - 5983, XP055395247, ISSN: 1936-0851, DOI: 10.1021/nn401678u
- JENNY GUN ET AL: "Oxygen plasma-treated gold nanoparticle-based field-effect devices as transducer structures for bio-chemical sensing", MICROCHIMICA ACTA ; AN INTERNATIONAL JOURNAL ON MICRO AND TRACEANALYSIS, SPRINGER-VERLAG, VI, vol. 164, no. 3-4, 4 July 2008 (2008-07-04), pages 395 - 404, XP019720900, ISSN: 1436-5073

## Beschreibung

Die vorliegende Erfindung betrifft das technische Gebiet der Messung von Ionenkonzentrationen, im Speziellen die Messung von Ionenkonzentrationen mittels FestkörperSensoren.

Ausführungsbeispiele der vorliegenden Erfindung beziehen sich auf einen Sensor mit einer Festkörper-Schichtstruktur wie in Anspruch 1 definiert. Weitere Ausführungsbeispiele der vorliegenden Erfindung beziehen sich auf ein Verfahren zum Herstellen eines Sensors wie in Anspruch 15 definiert.

### Hintergrund der Erfindung

In der herkömmlichen Ionenkonzentrationsmessung, die auf der elektrochemischen Messmethode beruht, arbeitet man mit 2 Elektroden, (A) und (B). Die eine Elektrode (A) ist die, die auf eine Ionenart selektiv reagiert, indem sie ihr elektrisches Potential proportional zu der selektiv zu erfassenden Ionenkonzentration in Messlösung verändert. Die andere Elektrode (B), wo der Elektrodentyp am häufigsten verwendet wird, reagiert nur sehr wenig auf irgendwelche Änderungen der Ionenkonzentrationen in demselben Messmedium, da sie einen besonderen Raum hat, wo die Ionenkonzentration sehr hoch und konstant gehalten wird (z. B. 19,5Masse% Kaliumchlorid-Wasser-Lösung), und wo aber zum Messmedium durch eine Engstelle eine Verbindung besteht, wobei die Engstelle so klein ist, dass nur unwesentlich die Konzentration im Elektrodenraum verändert wird. Das Elektrodenmaterial dieser weniger sensiblen Elektrode (B) steht im elektrochemischen Gleichgewicht mit einem schwerlöslichen Salz des Elektrodenmaterials, wodurch diese Elektrode auch eine Erdungsfunktion übernehmen kann, insbesondere dann, wenn der sensible Elektrodenpart (A) über eine elektrisch hochohmige Sensormembran fungiert. Es gibt noch einen weiteren Elektrodentyp (Bn), der aber in der Praxis kaum eine Bedeutung hat, weil ihr Betriebsaufwand zu hoch ist. Diese Elektrode ist die Normalwasserstoffelektrode (NHE).

Als Alternative zu den üblicherweise verwendeten Elektroden A und B lassen sich theoretisch auch Festkörpersensoren einsetzen, um eine Ionenkonzentration, d.h. eine Konzentration einer bestimmten Ionenart, in einem Messmedium, in der Regel in einer Flüssigkeit, zu messen. Auch in diesem Fall benötigt man einen ionensensitiven Sensor S, der selektiv auf die zu messende Ionenart reagiert, und einen vergleichenden Sensor V, der nur sehr wenig, optimaler Weise nur minimal, auf eine Änderung der Ionenkonzentration in dem Messmedium reagiert. Durch die Kombination eines weniger ionensensiblen Sensors V mit einem stärker ionensensiblen Sensor S, der selektiv auf eine Ionenkonzentration reagiert, und einer elektrisch leitfähigen Elektrode C, ist es möglich, selektiv eine gewünschte Ionenkonzentration zu erfassen. Die beiden Festkörpersensoren S, V beruhen beispielsweise auf dem Feldeffekt über einen Isolator, der die Leitfähigkeit in einem unter dem Isolator liegenden Halbleiter verändert. Sie sind also beide im Messbetrieb isoliert von dem elektrisch leitfähigen, zu messenden Medium. Um eine elektrische Aufladung zu vermeiden, wird im Sensorsystem, bestehend aus den Sensoren S und V und der Elektrode C, eine die Messlösung erdende elektrisch leitfähige Elektrode C implementiert.

Anwendungen von solch einem durchgehend aus Feststoffen bestehenden ionensensiblen Sensorsystem mit Feldeffektprinzip (ISFET-, EIS- und LAPS-Sensoren) liegen in der Umweltüberwachung, in der Biochemie/Medizintechnik und auch in der Lebensmittelindustrie sowie in der sonstigen industriellen Prozessüberwachung. Ein Hauptanwendungsbereich ist die pH-Messtechnik. Eine hierfür brauchbare Schaltung wurde bereits in [2] vorgestellt.

Ionensensible Festkörpersensorparts wie ISFETs werden zum größten Teil mit Si-Halbleitertechnologie gefertigt. Sie weisen gegenüber den schon länger produzierten pH-Glaselektroden gewisse anwendungsabhängige Vorteile auf. Das ist zum einen eben der Vorteil, dass kein splitternder Glasbruch passieren kann und zum anderen fehlt bei ionensensiblen Festkörpersensorparts der Innenpuffer, der z.B. bei Glaselektroden kein Festkörper ist und der bei der Zerstörung im Messmedium gelöst wird. Des Weiteren können weitere Vorteile wie Stoffumsatzfreiheit und eine vernachlässigbare Druckempfindlichkeit erwähnt werden. Die ionensensiblen Festkörperhalbleitersensoren, wie sie bisher produziert und angewendet werden, zumeist mit ISFET-Aufbau, haben das Ziel mit möglichst hoher Sensibilität, d.h. mit möglichst hoher aber stabil konstanter Potentialänderung auf eine geringe Änderung der Ionenkonzentration zu reagieren. Die Sensorcharakteristik ist die Sensorsteilheit, meist mit mV/p[lon] bei definierter Temperatur und definiertem Druck angegeben. Damit das ionenkonzentrationsabhängie Potential des Feldeffekt-Festkörpersensors bestimmt werden kann, wird auch bei diesen ein zweites Sensorelement erforderlich.

Anstelle eines Festkörpersensors als vergleichender Sensor V wird als Bezugswert für die Messung aber immer noch eine herkömmliche so genannte Bezugselektrode B verwendet, die unabhängig von der Änderung der Konzentrationen der anwesenden Ionen erstens immer das gleiche Potential liefert, zweitens gleichzeitig als Spannungsgeber für das Potential des Messelektrolyten dient und drittens als Erdung zum Messelektrolyten arbeitet. Dieses Elektrodenpotential ist jedoch abhängig von Temperatur und Druck und Konzentration des (in der Regel) Anions im Elektrodenraum, welches mit der Metallableitung ein schwerlösliches Salz bildet. Als Beispiele seien hier die Silber/Silberchlorid- und die Standardcalomelelektrode genannt. Eine besonders aufwändige Elektrode ist die Normalwasserstoffelektrode, bei der sogar der Druck des einen Reaktionspartners unmittelbar in das Vergleichspotential eingeht. Bei Zerstörung der herkömmlichen Metallsalzselektrode gelangt der Elektrolyt des Elektrodenraumes in die Messlösung, was für den Anwendungsbereich sehr schädlich sein kann. Damit eine Erdung einer solchen Elektrode gelingt, müssen Ionen über die Grenze des Elektrodenraumes zum Messelektrolyt, meist ein sogenanntes Diaphragma, hin- und her wandern können. Das Ziel, dass die Ionenkonzentration im Elektrodenraum konstant bleiben soll, wiederspricht sich mit dem Ziel, dass die Erdung möglichst niederohmig sein soll. Je stärker der Ionenausfluss an der Grenze (Diaphragma) durch die Geometrie (Porosität) eingeengt wird, desto größer ist der elektrische Widerstand dort und desto größer ist der Spannungsabfall an diesem Widerstand. Kein Diaphragmamaterial ist ideal, deshalb kommt es zu unterschiedlichen Bewegungen der Ionenarten, so dass der Spannungsabfall am Diaphragma (Diffusionsspannung) sich in Abhängigkeit von Druck, Temperatur und von der Zusammensetzung der Messlösung mehr oder weniger so ändert, dass dadurch ein scheinbar zufälliger Messfehler der Ionenkonzentration entsteht.

Um diese Nachteile der Bezugselektrode zu vermeiden, ist es wünschenswert, den Bezugswert für den Sensor S durch einen Festkörpersensor als vergleichenden Sensor V bereitzustellen. Dafür wird allerdings ein Festkörpersensor mit einer möglichst geringen lonensensitivität benötigt. Seit 1980, 5 Jahre nach der Entdeckung des Feldeffekt-Ionensensors, wird versucht, die Konzentration der ionenaktiven Oberflächenzentren eines Sensors, bzw. einer Messoberfläche eines Sensors, zu verringern [1]. Dazu wurden Schaltungen entwickelt, wo in-situ über eine Differenzbildung beide Sensoren, der eigentliche ionensensible und der weniger ionensensible, ausgelesen werden und wo der Erdungskontakt mit einem Edelmetall erfolgt, der gleichzeitig die Potentialansteuerung des Elektrolyten übernimmt [2,3,4]. Bei diesem Prinzip kann die Potentialgröße der Erdungselektrode fehlerhaft sein, denn für beide Sensoren ist der Messelektrolyt gleich und die Erdungselektrode auch. Anfangs war man bestrebt möglichst eine Unempfindlichkeit für den Vergleichssensor zu erreichen, später wurde eine minimale lonenempfindlichkeit zugelassen, wenn der Sensor dadurch stabiler wurde, und wenn die Empfindlichkeit und Störsicherheit der Schaltung groß genug war, um über eine ausreichende Steilheit mV/p[lon], eine genügende Messwertgenauigkeit (Rausch/Signal-Abstand) und Messwertkonstanz zu liefern.

Um die Konzentration der ionenaktiven Oberflächenzentren zu verkleinern, wurden verschiedene Methoden und Materialien angewendet. Bevor mit großen technologischen Aufwänden ionensensitve Feldeffekttransistoren (FET) aufgebaut wurden, wurden die Untersuchungen an "electrolyte-insulator-semiconductor" (EIS) -Sensoren durchgeführt. Das sind Strukturen bzw. Bauelemente, die über die CV-Messung ("capacity-voltage"-Messung) vermessen wurden. Bei konstanter Kapazität konnte die gleiche Potentialverschiebung wie an den FETs ermittelt werden. Grundbedingung der CV-Messmethode ist aber eine hohe und ungefähr konstante Leitfähigkeit der Messlösung und, dass die Sensoroberfläche vor Licht geschützt ist oder das Licht dauerhaft ein genau gleiches Spektrum und eine gleiche Intensität hat. Praktisch ist die Messgenaugkeit kleiner als es bei FET-Betrieb möglich ist.

Um die lonensensibilität für den Vergleichssensor V zu verringern wurden verschiedene Wege eingeschlagen:
(i) Ionenaktive Oberflächengruppen wurden mit ioneninaktiven Molekülen verbunden. So passivierte Van den Berg [6] die pH-oberflächenaktiven =Si-OH Gruppen durch Silylierung mit kleinen Molekülen. Mit steigendem Silylierungsgrad wird die Sensoroberfläche hydrophober. Der Nachteil der Silylierung ist die chemische Unbeständigkeit gegen Chemikalien vor allem bei höherer Temperatur, d.h. die erzeugte Brückenbindung wird aufgebrochen, die lonensensibilität steigt wieder an. Ist die Hydrophobie zu groß, wird die Benetzung des Sensors mit einer wässrigen Messlösung erschwert und es kann sich sogar ein Gasfilm zwischen Messelektrolyt und Sensoroberfläche bilden, was nicht nur einen falschen pH-Wert vortäuscht, es kann der Arbeitsbereich des Sensors verlassen werden. Der Gasfilm muss nicht durch die Luft kommen, er kann auch durch Ausgasen der Messlösung bei Temperaturerhöhung erfolgen.
(ii) Die chemische Stabilität einer hydrophoberen Oberfläche kann durch Schichtaufbringung von einem organischen Polymer erhöht werden. M. Fujihira [1] versuchte H⁺-sensible Oberflächengruppen des Si₃N₄ durch organische Polymere, wie PVC und Parylen, einfach abzudecken. Die Abscheidung lieferte nichtreproduzierbare pH-Steilheiten von 10 bis 50mV/pH und die Schichten hafteten nicht ausreichend. T. Matsuo & H.Nakajima [5] erreichte auch nur minimal 10mV/pH durch Parylenabdeckung. Je nach Prozessparameterdetails der Abscheidung änderten sich die lonensensitivität, Stabilität und die Feldintensität, die im Halbleiter ankommt. Des Weiteren tritt auch das Problem Benetzung und Gasfilm auf. Mit diesen Polymerschichten werden Ionen geblockt [7].
(iii) M. Chudy [8] führte weitere Argumente auf: Eine Ionen-blockierende, isolierende Polymerschicht zeigt a) eine Abhängigkeit von der Ionenstärke (s. a. [11]) und b) eine Drift durch eindiffundierende Ionen. Eine Schicht, die keine Ionen blockiert ("blank membranes", Membranen ohne lonophore), hat a) eine leichte Leitfähigkeit und b) ist nur noch permeabel für Kationen. Um diese Permselektivität der Kationen zu unterdrücken, baute er z.B. einen großen lipohilen Na-Komplex des Calixpherand ein. Dadurch konnten im pH-Bereich pH2-10 für Na, K, Ca und für Cl eine sehr geringe Empfindlichkeit erhalten werden. Weiterführende Arbeiten sollen das "plasticized PVC" gegen eine IC kompatibleres Polymer wie Polysiloxan ersetzen. Allerdings blieben Fragen zur Temperaturstabilität und Toxizität offen.
(iv) Wie in [8] mit der Suche nach IC ("integrated circuit") kompatibleren Materialien angesprochen wurde, ist die Fertigbarkeit in einer IC-Si-Halbleiterfab ein wichtiges Ziel. Die Integration eines ionensensiblen Sensors mit einem weniger ionensiblen Sensor zusammen mit der Erdungselektrode auf einem Chip ermöglicht hohe und kostengünstige Stückzahlen. Aus den ersten Jahren nach der Entdeckung des Feldeffekt-Ionensensors erfuhr man, dass das Siliziumoxid von Natur aus eine kleine lonensensibilität hat aber nicht ausreichend selektiv ist. In der Sensormembran der konventionellen Glaselektrode wurden Zuschlagstoffe zulegiert, damit die Sensibilität steigt. Letztendlich gelang es erst durch ein Vielkomponentensystem die Selektivität zu erhöhen. In [2] wurde eine IC-Herstellungstechnologie erprobt, wo das ionenblockende LP-Siliziumnitrid thermisch oxidiert wird und Siliziumoxynitrid, SiO_{X}N_{Y}, auf LP-Si₃N₄/SiO₂/Si entsteht. Parallel wurde auch das Gateoxid SiO₂ in der lonensensibilität charakterisiert. Hier wurden für beide, SiO₂ und SiO_{X}N_{Y}, lonensensibilitäten von 17-20mV/pH von pH4 bis pH9 gefunden, allerdings auch eine Lichtempfindlichkeit mehr als 250mV. Der Sensor hatte auch eine Drift von ca. 26mV/h und in der Schaltung (on Chip) mit dem ISFET reduzierte sich die Lichtempfindlichkeit auf 40mV und die Drift auf 1mV/h. Um die Restsensibilität noch weiter zu drücken, wurden Bor-Implantationsversuche in das Siliziumnitrid durchgeführt und mit der CV-Methode gemessen. Danach erhöhte sich aber die hier unerwünschte lonensensibilität auf Na⁺ und K⁺. Als Erdungselektroden wurden Edelmetallschichten entweder aus Au/Cr oder Pt/Ti ausgeführt [9]. Auch [3] versuchte ähnliches, wobei er PE-Siliziumoxynitrid herstellte. Es wurden 32mV/pH erhalten. Danach erhöhte sich die Sensibilität mit jedem Einsatz in Säuren oder Laugen. Seit einigen Jahren stehen moderne O₂-Plasmaprozesse zur Verfügung, die in der Lage sind, LP-Si₃N₄ bei weniger als 400°C 8nm tief zu oxidieren [10] und minimale Steilheiten von ca. 16mV/pH zu erreichen. Die Sensorsignale zeigen aber Hysteresen und Driften auf.

Andere wie [4] erprobten ein Technologiegemisch wie z.B. aus der Abscheidung PE-Siliziumoxynitrid und der Silylierung, jedoch sind die Stabilitäten noch zu gering.

Die organischen Schichten haben wegen ihrer niedrigen Dielektrizitätskonstanten von 2 bis 3 eine zu schlechte Feldeffektwirkung, wegen ihrer amphoteren Struktur mit zu niedriger molekularer Dichte keine ausreichend langzeitstabilen Eigenschaften für eine konstant niedrige lonensensibilität und durch die Eindiffusion von Wassermolekülen und Kationen werden sie sensibel auf die Ionenstärke der Messlösungen. Durch die Herstellung von nichtblockenden organischen Polymeren mit einer Anzahl von organischen Zusatzspezialstoffen wird die Qualität nicht entscheidend besser, wobei eingebaute Substanzen bei höheren Temperaturen ausgewaschen werden und in die Messlösung diffundieren, wo man sie nicht haben will. Die Säure- und Laugenstabilität beschränkt sich auf den pH-Bereich von 4 bis 10, wenn die Temperatur unter 50°C bleibt.

Die anorganische Schicht SiO₂ zeigt ebenfalls eine sehr kleine lonensensibilität und eine deutlich größer Dielektrizitätskonstante von 4 und ist halbleiterkompatibel. Aber gerade die in der IC-Technologie erzeugten SiO₂ Schichten sind von amorpher Struktur und haben niedrige Dichten von 2.1g/cm³, kristallines SiO₂ kann 2.65g/cm³ erreichen. So steigt die lonensensibilität mit der Zeit und der Temperatur in der Messlösung und vor allem in Gegenwart von basischen Medien an, da Kationen eindiffundieren und die Struktur aufbrechen. Die Erzeugung von amorphen SiOₓN_{y} aus amorphen Si₃N₄ bringt zwar eine höhere Dichte mit sich, aber durch die amorphe Struktur und die lonensensibilität des Stickstoffs (wegen des einsamen Elektronenpaars) gegenüber Kationen sind ähnliche Drift und Hysterese Vorgänge mit oberhalb pH9 zu beobachten.

Ein Artikel von Wipf et al., ACS Nano, 7, 7, 5978 (2013) zieht zur Erklärung einer moderaten Sensorantwort eines ionensensitiven Feldeffekt-Transistors auf Protonen die Formation einer oxidierten Goldoberfläche in Betracht. Auch in einem Artikel von Zeng et al.,

Sensors and Actuators B: Chemical, 281, 60-71 (2019), wird eine oxidierte Goldoberfläche zur Erklärung von Messresultaten an einem Halbleiterionensensor in Betracht gezogen.

In Anbetracht der Nachteile bisheriger Lösungen besteht ein Bedarf an einem Sensor, der einen verbesserten Kompromiss zwischen einer chemisch möglichst stabilen Oberfläche, einer möglichst guten thermischen Stabilität, einer möglichst geringen lonensensitivität und einer einfachen Herstellbarkeit bietet.

### Zusammenfassung der Erfindung

Diese Aufgabe wird mittels dem Sensor, dem Sensorsystem und dem Verfahren zur Herstellung eines Sensors gemäß den unabhängigen Ansprüchen gelöst.

Der Kerngedanke der vorliegenden Erfindung ist es, dass eine Schicht mit einem Gold-Material und einem Sauerstoffmaterial eine sehr geringe aber vorhandene lonensensitivität aufweist. Damit ist eine solche Schicht mit einem Gold-Material und einem Sauerstoff-material sehr gut als Sensorschicht geeignet, insbesondere für einen ionensensitiven Sensor mit einer geringen lonensensitivität.

Ein Ausführungsbeispiel der vorliegenden Erfindung schafft einen Sensor mit einer Festkörper-Schichtstruktur, der folgende Elemente aufweist: Eine erste Schicht, beispielsweise ein Substrat, die ein Halbleitermaterial aufweist; eine zweite Schicht, beispielsweise eine Sensorschicht, die ein Gold-Material und ein Sauerstoff-Material aufweist; und eine zwischen der ersten und der zweiten Schicht angeordnete Isolationsschicht. Die Merkmale eines derartigen Sensors sind in Anspruch 1 definiert.

Der Sensor basiert auf dem Prinzip, dass durch die Anordnung der Isolationsschicht zwischen der ersten Schicht und der zweiten Schicht ein elektrisches Feld zwischen der ersten Schicht und der zweiten Schicht erzeugt werden kann, bzw. ein elektrisches Potential zwischen der ersten Schicht und der zweiten Schicht vorhanden oder aufgebaut oder entstehen kann. Ein solcher Feldeffekt kann beispielsweise durch Ionen an einer Oberfläche der zweiten Schicht hervorgerufen werden. Befindet sich der Sensor beispielsweise in einer Flüssigkeit, wie einem Messmedium, können in dieser Flüssigkeit gelöste Ionen, die sich an einer Oberfläche der zweiten Schicht befinden, einen Feldeffekt in dem Sensor hervorrufen. Ein solcher Feldeffekt ist geeignet, um ausgelesen oder bestimmt zu werden und kann zur Bestimmung einer Ionenkonzentration in einer zu messenden Flüssigkeit verwendet werden.

Indem die zweite Schicht ein Gold-Material und ein Sauerstoff-Material aufweist, kann eine besonders geringe Sensitivität der zweiten Schicht gegenüber einer Ionenkonzentration in einer zu messenden Flüssigkeit erreicht werden. Dadurch, dass die zweite Schicht zusätzlich zu dem Gold-Material ein Sauerstoff-Material aufweist, hat die zweite Schicht beispielsweise eine stark verringerte lonensensitivität in Vergleich zu einer Schicht, die nur ein Gold-Material aufweist. Dadurch, dass die zweite Schicht ein Gold-Material und ein Sauerstoff-Material aufweist, verliert Gold beispielsweise seine hohe Sensibilität zu Cl-Ionen. Ferner kann beispielsweise Schwefel mit Goldatomen vor allem dann Addukte bilden, wenn vorher vorhandener Sauerstoff von der Goldoberfläche entfernt worden ist. Aufgrund seiner geringen lonensensitivität ist der Sensor beispielsweise besonders gut geeignet um als vergleichender Sensor V in einem eingangs erwähnten Sensorsystem verwendet zu werden. Ist die lonensensitivität eines Sensors besonders klein, beispielsweise kleiner als die lonensensitivität eines ionensensitiven Sensors, kann aus einer Sensorsignaldifferenz zwischen einem Sensor und einem ionensensitiven Sensor eine Änderung einer Ionenkonzentration eines Ions bei Änderung eines Messmediums bestimmt werden. Für eine solche Messung ist es beispielsweise besonders vorteilhaft, wenn der Sensor eine besonders geringe Sensitivität gegenüber dem zu messenden Ion hat. Durch eine Anwendung eines Edelmetall-Sauerstoff Systems, insbesondere eines Gold-Sauerstoff Systems, für die zweite Schicht, d.h. eine Sensorschicht, werden kristalline oder teilkristalline Strukturen ermöglicht, die nur wenig ionisch sensibel sein können und thermisch stabil sind, beispielsweise bis 50°C oder bis über dem Siedepunkt von wässrigen Lösungen.

Um den Sensor zum Bestimmen einer Ionenkonzentration in einer Flüssigkeit zu verwenden, ist es besonders vorteilhaft, wenn eine Sensoroberfläche des Sensors eine gute Benetzbarkeit aufweist. Dadurch, dass die zweite Schicht sowohl ein Gold-Material als auch ein Sauerstoff-Material, beispielsweise ein Gemisch, das sowohl Gold als auch Sauerstoff aufweist, steigt die Hydrophilie der zweiten Schicht, was die Benetzbarkeit begünstigt. Insbesondere ist eine lonensensibilität der zweiten Schicht trotz vorhandener Hydrophilie so klein, dass in einem schaltungstechnischen Sensorsystem eine Messgenauigkeit ausreichend groß ist.

Das Vorliegen des Gold-Materials und des Sauerstoff-Materials in der zweiten Schicht, beispielsweise einer kompakten Schicht, ist außerdem viel weniger reaktiv als fein verteilte Partikel mit derselben Konzentration des Sauerstoff-Materials, beispielsweise Sauerstoff, in einem Gold-Material, beispielsweise in Gold. Der Sensor bietet außerdem den Vorteil, dass sich ein Anteil des Gold-Materials und ein Anteil des Sauerstoff-Materials der zweiten Schicht einstellen lässt. Ein hoher Anteil des Sauerstoff-Materials in der zweiten Schicht wirkt sich beispielsweise besonders vorteilhaft auf die Insensitivität (z.B. eine geringe Sensitivität) der zweiten Schicht gegenüber Ionen aus. Ein hoher Anteil des Gold-Materials in der zweiten Schicht wirkt sich beispielsweise positiv auf eine Langzeitstabilität der zweiten Schicht aus. Somit kann durch eine geeignete Wahl der Anteile des Sauerstoff-Materials und des Gold-Materials an der zweiten Schicht die Eigenschaft (beispielsweise die lonensensitivität und/oder die Stabilität) der zweiten Schicht, beispielsweise einer Sensorschicht, an die jeweilige Anwendung angepasst werden.

Des Weiteren lässt sich die zweite Schicht, die ein Gold-Material und ein Sauerstoff-Material aufweist, vergleichsweise einfach herstellen, beispielsweise plasmachemisch, durch Abscheidung oder Plasmaabscheidung, durch Buffern oder Temperprozesse oder durch chemische Abscheidung.

Dadurch, dass die zweite Schicht ein Gold-Material und ein Sauerstoff-Material aufweist, hat die zweite Schicht eine hohe Dielektrizitätskonstante, das heißt eine hohe Polarisierbarkeit. Dadurch wird ein Feldeffekt in dem Sensor erhöht, wodurch eine Strom-Spannung-Steilheit ausreichend steil sein kann und damit Messfehler reduziert werden können.

Zusammenfassend ist somit festzuhalten, dass der beschriebene Sensor mit Festkörper-Schichtstruktur mit vergleichsweise geringem technologischem Aufwand herzustellen ist, gute messtechnische Eigenschaften aufweist und es ermöglicht, anwendungsspezifisch einen guten Kompromiss zwischen einer geringen lonensensitivität und einer Stabilität, z.B. einer chemischen und/oder thermischen Beständigkeit, der Sensoroberfläche zu finden.

Die zweite Schicht weist einen Sauerstoffanteil zwischen 0,1 % und 67 %, das heißt zwischen 0,1 at% (Atomprozent) und 67 at%, auf. Ein Sauerstoff-Anteil kann auch als eine mittlere Sauerstoffkonzentration bezeichnet werden. Ein gemeinsamer Gesamtanteil des Gold-Materials und des Sauerstoff-Materials an der zweiten Schicht kann dabei beispielsweise mehr als 99 % betragen. Beispielsweise kann die zweite Schicht, von möglichen Verunreinigungen durch andere Atome abgesehen aus dem Gold-Material und dem Sauerstoff-Material bestehen. Ein Sauerstoffanteil von über 0,1 % in der zweiten Schicht gewährleistet, dass die zweite Schicht eine geringe lonensensitivität aufweist. Ein Sauerstoffanteil von unter 67 % gewährleistet, dass die zweite Schicht sowohl chemisch als auch thermisch ausreichend stabil ist. Außerdem kann der Sauerstoffanteil der zweiten Schicht eine Kristallinität der zweiten Schicht beeinflussen, beispielsweise eine Größe von Kristallen oder Kristalldomänen, innerhalb derer ein Material der zweiten Schicht eine kristalline Form aufweist. Zum Beispiel kann ein geringer Sauerstoffanteil eine hohe Kristallinität, d.h. große Kristalldomänen, zur Folge haben und eine hoher Sauerstoffanteil eine geringe Kristallinität. Der Sauerstoffanteil der zweiten Schicht kann sich während eines Betriebs des Sensors, beispielsweise während einem Kontakt der Sensorschicht, beispielsweise der zweiten Schicht, mit flüssigen, in der Regel wässrigen, zu messenden Medien verändern. Beispielsweise kann eine zweite Schicht, die vor einer Messung einen Sauerstoffanteil von 67 % hatte durch die Einfügung von Wasserstoff beziehungsweise Wassermolekülen aus diesen Medien während oder nach der Messung einen Sauerstoffanteil von unter 67 % erreichen. Vorzugsweise befindet sich der Sauerstoffanteil der zweiten Schicht vor und während einer Messung in einem Bereich zwischen 0,1 % und 67 %.

Bei einem weiteren Ausführungsbeispiel weist die zweite Schicht ferner ein Edelmetall-Material mit von Gold verschiedenen Edelmetallatomen auf. Edelmetallatome in der Schicht können beispielsweise Atome von Platin, Palladium, Iridium, Osmium, Rhodium und/oder Ruthenium sein. Der Sauerstoffanteil in der zweiten Schicht beträgt wie oben beschrieben zwischen 0.1 % und 67 %. Ein gemeinsamer Gesamtanteil der Goldatome und der von Gold verschiedenen Edelmetallatome und der Sauerstoffatome in der zweiten Schicht beträgt mindestens 99%. In anderen Worten, besteht die zweite Schicht, abgesehen von Verunreinigungen, aus Goldatomen, Sauerstoffatomen und von Gold verschiedenen Edelmetallatomen.

Dadurch, dass die zweite Schicht von Gold verschiedene Edelmetallatome aufweist, kann die chemische Beständigkeit der zweiten Schicht in speziellen Medien erhöht werden. Beispielsweise kann eine bestimmte Edelmetallatomart eine chemische Beständigkeit gegenüber einem bestimmten Medium, beispielsweise einem bestimmten Messmedium, beispielsweise mit einer bestimmten Ionenart erhöhen.

Gemäß einem weiteren Ausführungsbeispiel beträgt die Anzahl der von Gold verschiedenen Edelmetallatome in der zweiten Schicht maximal 25 % der Anzahl von Goldatomen in der zweiten Schicht. Dadurch kann eine geringe lonensensitivität in der zweiten Schicht gewährleistet werden und gleichzeitig die chemische Beständigkeit der zweiten Schicht gegenüber speziellen Medien erhöht werden. Die zweite Schicht weist eine Dicke zwischen 5 nm und 10 µm auf. Durch eine Dicke der zweiten Schicht von über 5 nm wird gewährleistet, dass auch bei einem Eindringen von Ionen aus einem Messmedium, beispielsweise einer zu messenden Flüssigkeit, in die zweite Schicht sowohl die Stabilität des Sensors als auch eine definierte lonensensitivität gewährleistet sind. Durch eine Dicke der zweiten Schicht von unter 10 µm, wird eine Stärke eines Feldeffekts zwischen der ersten Schicht und der zweiten Schicht begünstigt, so dass eine bessere Messgenauigkeit erreicht wird. Die Dicke der zweiten Schicht kann beispielsweise von dem Sauerstoffanteil der zweiten Schicht abhängen oder von einer Größe von Kristalldomänen der zweiten Schicht abhängen. Zum Beispiel kann eine große Größe von Kristalldomänen ein tiefes Eindringen von einer Flüssigkeit und/oder von Ionen einer Flüssigkeit in die zweite Schicht zur Folge haben, wodurch es vorteilhaft sein kann, eine größere Dicke der zweiten Schicht zu wählen.

Gemäß einem weiteren Ausführungsbeispiel weist eine Sauerstoffkonzentration der zweiten Schicht einen Gradienten in einer Richtung senkrecht zu der zweiten Schicht auf. Dabei kann die Richtung senkrecht zu der zweiten Schicht beispielsweise auch als eine Richtung senkrecht zu einer der ersten Schicht zugewandten Hauptoberfläche der zweiten Schicht bezeichnet werden, etwa entlang einer Oberflächennormale. Beispielsweise kann die Sauerstoffkonzentration in der zweiten Schicht an einer der Isolationsschicht zugewandten Oberfläche höher sein als in einer Schichtmitte (bezogen auf eine Richtung senkrecht zu der zweiten Schicht) der zweiten Schicht. Die Sauerstoffkonzentration der zweiten Schicht kann beispielsweise auch von der Schichtmitte zu einer der Isolationsschicht abgewandten Oberfläche der zweiten Schicht zunehmen. Durch eine an einer der Isolationsschicht zugewandten Oberfläche erhöhte Sauerstoffkonzentration, kann beispielsweise eine Haftung der zweiten Schicht auf der Isolationsschicht vorteilhaft erhöht werden.

Gemäß einem weiteren Ausführungsbeispiel weist der Sensor ferner eine Mehrzahl von Messkontakten auf, die mit der ersten Schicht elektrisch leitfähig verbunden sind, wobei die Messkontakte an eine der zweiten Schicht zugewandten Hauptoberfläche der ersten Schicht angrenzend angeordnet sind. Beispielsweise können die Messkontakte ausgelegt sein, um einen Feldeffekt zwischen der ersten Schicht und der zweiten Schicht zu messen oder zu bestimmen. Dadurch, dass der Sensor zusätzlich die Mehrzahl von Messkontakten aufweist, lässt sich ein Feldeffekt zwischen der ersten Schicht und der zweiten Schicht besonders genau messen oder bestimmen.

Gemäß einem weiteren Ausführungsbeispiel weist die Isolationsschicht in einer Richtung senkrecht zu der Isolationsschicht einen elektrischen Widerstand größer als 10 (GΩ) GOhm, vorzugsweise größer als 100 (GΩ) GOhm, auf. Eine Richtung senkrecht zu der Isolationsschicht kann auch eine Richtung senkrecht zu der ersten Schicht oder senkrecht zu der zweiten Schicht sein. Durch einen besonders großen elektrischen Widerstand der Isolationsschicht kann ein Feldeffekt zwischen der ersten Schicht und der zweiten Schicht erhöht werden, wodurch der Sensor genauere Messergebnisse erzielen kann.

Gemäß einem weiteren Ausführungsbeispiel weist die Festkörper-Schichtstruktur ferner eine zwischen der Isolationsschicht und der zweiten Schicht angeordnete elektrisch und/oder ionisch leitfähige Zwischenschicht auf. Eine Zwischenschicht zwischen der Isolationsschicht und der zweiten Schicht kann eine besonders gute Haftung der zweiten Schicht auf der Isolationsschicht gewährleisten. Dadurch, dass die Zwischenschicht elektrisch und/oder ionisch leitfähig ausgelegt ist, kann ein stärkerer Feldeffekt zwischen der ersten Schicht und der zweiten Schicht beziehungsweise der Zwischenschicht gewährleistet werden.

Gemäß einem weiteren Ausführungsbeispiel weist die Zwischenschicht eine Dicke zwischen 5 nm und 10 µm auf. Durch eine Dicke der Zwischenschicht von über 5 nm kann eine gute Haftung der zweiten Schicht auf der Zwischenschicht gewährleistet werden. Durch eine Dicke der Zwischenschicht von unter 10 µm, kann gewährleistet werden, dass die Zwischenschicht einen Feldeffekt zwischen der ersten Schicht und der zweiten Schicht nicht oder kaum beeinträchtigt.

Gemäß einem weiteren Ausführungsbeispiel weist die Zwischenschicht in einer Richtung senkrecht zur Zwischenschicht, beispielsweise einer Richtung senkrecht zur zweiten Schicht, einen elektrischen Widerstand kleiner als 100 MΩ auf. Ein kleiner Widerstand der Zwischenschicht vergrößert den Feldeffekt zwischen der ersten Schicht und der Zwischenschicht beziehungsweise der zweiten Schicht, wodurch genauere Messergebnisse erzeugt werden können.

Gemäß einem weiteren Ausführungsbeispiel ist die Isolationsschicht an eine Hauptoberfläche der ersten Schicht angrenzend angeordnet. Ferner ist die zweite Schicht der Hauptoberfläche der ersten Schicht gegenüberliegend, an die Isolationsschicht angrenzend angeordnet. Durch eine solche Anordnung der Festkörper-Schichtstruktur ist der Sensor besonders gut für Feldeffektmessungen geeignet. Ferner kann je nach Sauerstoffanteil der zweiten Schicht die zweite Schicht elektrisch beziehungsweise ionisch leitend sein. Durch die Lage der zweiten Schicht auf der Isolationsschicht, die sich wiederum auf einem Halbleitermaterial befindet, sind elektrochemische Reaktionen, die die Sauerstoffkonzentration über vorteilhafte Grenzen hinaus verändern, beispielsweise unter einen Sauerstoffanteil in der zweiten Schicht von 0,1 % absenken oder über einen Sauerstoffanteil in der zweiten Schicht von 67 % erhöhen, gehemmt.

Gemäß einem weiteren Ausführungsbeispiel ist die Isolationsschicht an eine Hauptoberfläche der ersten Schicht angrenzend angeordnet. Ferner ist die Zwischenschicht der Hauptoberfläche der ersten Schicht gegenüberliegend, an die Isolationsschicht angrenzend angeordnet. Ferner ist die zweite Schicht der Isolationsschicht gegenüberliegend an die Zwischenschicht angrenzend angeordnet. Eine Anordnung der zweiten Schicht angrenzend an die Zwischenschicht gewährleistet eine gute Haftung der zweiten Schicht auf der Zwischenschicht. Ferner weist diese Anordnung der Festkörper-Schichtstruktur die Vorteile der im vorigen Absatz genannten Anordnung auf. Auch diese Anordnung ist besonders gut für Feldeffektmessungen geeignet und/oder je nach Sauerstoffanteil der zweiten Schicht kann die zweite Schicht elektrisch beziehungsweise ionisch leitend sein.

Gemäß einem weiteren Ausführungsbeispiel weist der Sensor ferner eine Abdichtstruktur auf, wobei die Abdichtstruktur derart angeordnet ist, dass sie eine der ersten Schicht abgewandte Messoberfläche der zweiten Schicht räumlich von der ersten Schicht trennt, wobei die Abdichtstruktur ausgestaltet ist, um einen ionisch und/oder elektrisch leitfähigen Kontakt zwischen der Messoberfläche und der ersten Schicht durch eine Flüssigkeit zu verhindern, und wobei die Abdichtstruktur undurchlässig und resistent gegenüber sauren und/oder basischen Flüssigkeiten ist. Weist der Sensor die genannte Abdichtstruktur auf, ist er besonders gut geeignet, um Ionenkonzentrationen in Flüssigkeiten zu messen, insbesondere in sauren oder basischen Flüssigkeiten.

Gemäß einem weiteren Ausführungsbeispiel weist der Sensor ferner einen elektrisch leitfähigen Kontakt auf, der mit der ersten Schicht elektrisch leitfähig verbunden ist. Weist der Sensor den elektrisch leitfähigen Kontakt zur ersten Schicht auf, kann der Sensor besonders gut dafür verwendet werden, kapazitive Messungen zwischen der ersten Schicht und der zweiten Schicht vorzunehmen oder auch um Feldeffektmessungen mit dem Sensor durchzuführen.

Gemäß einem weiteren Ausführungsbeispiel weist der Sensor eine geringe lonensensitivität auf, beispielsweise eine lonensensitivität geringer als 46mV/p(lon) bei 25°C, oder eine um mehr als 8% geringere Sensorsteilheit als die Nernst-Steilheit (z.B. Nernst-Steigung) bei jeder Messtemperatur. Eine geringe lonensensitivität ist besonders vorteilhaft um den Sensor als vergleichenden Sensor für einen ionensensitiven Sensor mit selektiver Ionensensitivität zu benutzen um einen Ionenkonzentration zu bestimmen.

Ein Ausführungsbeispiel der vorliegenden Erfindung schafft ein Sensorsystem, das folgende Elemente aufweist: Ein Sensor gemäß einem der vorhergehenden Ausführungsbeispiele, wobei die zweite Schicht des Sensors eine der ersten Schicht des Sensors abgewandte Messoberfläche aufweist; Ein ionensensitiver Sensor mit einem ionensensitiven Sensorbereich; ein an die Messoberfläche des Sensors und den ionensensitiven Sensorbereich des ionensensitiven Sensors angrenzendes Messvolumen; ein Erdungskontakt, wobei der Erdungskontakt an das Messvolumen angrenzend oder innerhalb des Messvolumens angeordnet ist.

Gemäß einem weiteren Ausführungsbeispiel weist der ionensensitive Sensor des Sensorsystems eine Festkörperstruktur auf und/oder weist der Erdungskontakt des Sensorsystems ein Metall auf.

Gemäß einem weiteren Ausführungsbeispiel weist die zweite Schicht des Sensors des Sensorsystems eine geringere Sensitivität gegenüber einem zu detektierenden Ion auf, als ein Material des ionensensitiven Sensorbereichs des ionensensitiven Sensors des Sensorsystems.

Ein weiteres Ausführungsbeispiel der vorliegenden Erfindung schafft ein Verfahren zum Herstellen eines Sensors, das folgende Schritte aufweist: Bereitstellen einer Ausgangs-Schichtstruktur mit einer ersten Schicht und einer Isolationsschicht, wobei die erste Schicht ein Halbleitermaterial aufweist; Herstellen einer zweiten Schicht, so dass die zweite Schicht ein Gold-Material und ein Sauerstoff-Material aufweist, und so dass die zweite Schicht durch die Isolationsschicht getrennt von der ersten Schicht angeordnet ist. Die Schritte eines derartigen Verfahrens sind in Anspruch 15 definiert.

Gemäß einem weiteren Ausführungsbeispiel umfasst das Verfahren außerdem: Herstellen einer Zwischenschicht auf der Ausgangs-Schichtstruktur, wobei die Zwischenschicht ein elektrisch und/oder ionisch leitfähiges Material aufweist; so dass die Zwischenschicht durch die Isolationsschicht getrennt von der ersten Schicht angeordnet ist; und wobei das Herstellen der Zwischenschicht vor dem Herstellen der zweiten Schicht erfolgt.

Gemäß einem Ausführungsbeispiel umfasst das Herstellen der zweiten Schicht ein Einstellen einer lonensensitivität des Sensors.

Das entsprechende Verfahren basiert auf denselben Überlegungen wie die oben erläuterte Vorrichtung. Ferner sei darauf hingewiesen, dass das Verfahren um alle Merkmale, Funktionalitäten und Details ergänzt werden kann, die hierin in Hinblick auf die erfindungsgemäße Vorrichtung bzw. den erfindungsgemäßen Sensor beschrieben sind. Das Verfahren kann um die genannten Merkmale, Funktionalitäten und Details sowohl einzeln als auch in Kombination ergänzt werden.

Einige Ausführungsbeispiele sind exemplarisch in der Zeichnung dargestellt und werden nachstehend erläutert. Es zeigen:
- Fig. 1: eine seitliche Schnittansicht eines Sensors gemäß einem Ausführungsbeispiel,
- Fig. 2A: eine seitliche Schnittansicht eines Sensors gemäß einem Ausführungsbeispiel in einer Messanordnung, ausgeführt als EIS-Struktur,
- Fig. 2B: eine seitliche Schnittansicht eines Sensors gemäß einem Ausführungsbeispiel in einer Messanordnung, ausgeführt als EIS-Struktur mit Zwischenschicht,
- Fig. 3A: eine seitliche Schnittansicht eines Sensors gemäß einem Ausführungsbeispiel in einer Messanordnung, ausgeführt als FET-Struktur,
- Fig. 3B: eine seitliche Schnittansicht eines Sensors gemäß einem Ausführungsbeispiel in einer Messanordnung, ausgeführt als FET-Struktur mit einer Zwischenschicht,
- Fig. 4: ein Flussdiagramm eines Verfahrens zum Herstellen eines Sensors gemäß einem Ausführungsbeispiel,
- Fig. 5: eine schematische Darstellung eines Sensorsystems gemäß einem Ausführungsbeispiel.

Nachfolgend werden Ausführungsbeispiele mit Bezug auf die Figuren näher beschrieben, wobei Elemente mit derselben oder ähnlichen Funktion mit demselben Bezugszeichen versehen sind.

Elemente, die als optional gekennzeichnet sind, sind entweder optionale Elemente oder Elemente, die nicht Teil der Erfindung sind, aber zum besseren Verständnis der Erfindung in der Zeichnung dargestellt sind.

Verfahrensschritte, die in einem Blockdiagramm dargestellt und mit Bezugnahme auf das selbige erläutert werden, können auch in einer anderen als der abgebildeten beziehungsweise beschriebenen Reihenfolge ausgeführt werden. Außerdem sind Verfahrensschritte, die ein bestimmtes Merkmal einer Vorrichtung betreffen mit ebendiesem Merkmal der Vorrichtung austauschbar, was ebenso anders herum gilt.

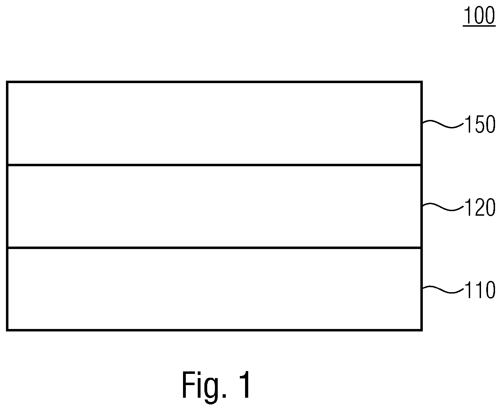

Fig. 1 zeigt eine seitliche Schnittansicht eines Sensors 100 mit einer Festkörper-Schichtstruktur gemäß einem Ausführungsbeispiel. Unter einer Schichtstruktur ist eine Struktur zu verstehen, die mehrere Schichten aufweist, wobei die mehreren Schichten entlang einer Richtung angeordnet sind. Eine Schicht der Schichtstruktur weist zwei gegenüberliegende Hauptoberflächen auf, die durch Nebenoberflächen verbunden sind. Eine Hauptoberfläche einer Schicht zweier benachbarter Schichten der Schichtstruktur ist einer Hauptoberfläche der anderen Schicht der zwei benachbarten Schichten gegenüberliegend angeordnet. Eine Oberflächennormale einer Schicht ist eine Richtung senkrecht zu einer Hauptoberfläche der Schicht. Eine Richtung senkrecht zu einer Schicht ist beispielsweise eine Richtung parallel zu einer Oberflächennormalen der Schicht. Beispielsweise ist die Richtung, entlang derer die mehreren Schichten angeordnet sind parallel zu einer Oberflächennormale einer Schicht. Eine Richtung senkrecht zu der Oberflächennormale einer Schicht der Schichtstruktur kann beispielsweise als eine laterale Richtung oder als eine Richtung parallel zu der Schichtstruktur oder als eine Richtung parallel zu einer der mehreren Schichten der Schichtstruktur bezeichnet werden.

Der Sensor 100 mit einer Festkörper-Schichtstruktur weist eine erste Schicht 110 auf, die ein Halbleitermaterial aufweist. Ferner weist der Sensor 100 eine zweite Schicht 150 auf, die ein Gold-Material und ein Sauerstoff-Material aufweist. Außerdem weist der Sensor 100 eine zwischen der ersten Schicht 110 und der zweiten Schicht 150 angeordnete Isolationsschicht 120 auf, beispielsweise eine Schicht mit elektrisch isolierenden Eigenschaften, d.h. mit einem hohen elektrischen Widerstand.

Der Sensor 100 ist beispielsweise ein Sensor zum Bestimmen einer Ionenkonzentration in einer Flüssigkeit. Beispielsweise kann der Sensor 100 Teil eines Sensorsystems, bestehend aus mehreren Sensoren, sein oder als Teil eines solchen Sensorsystems vorgesehen sein, wobei das Sensorsystem beispielsweise in der Lage ist, eine Ionenkonzentration in einer Flüssigkeit zu bestimmen. Ein solches Sensorsystem kann beispielsweise aus zwei Sensoren bestehen, wobei ein Sensor sensitiv auf eine Ionenart, deren Konzentration bestimmt werden soll, reagiert, und der andere Sensor, beispielsweise der Sensor 100, eine geringe Sensitivität gegenüber der Ionenart, deren Konzentration bestimmt werden soll, aufweist. Der Sensor 100 kann also beispielsweise einen Bezugswert oder einen Referenzwert für eine lonenkonzentrationsmessung liefern. Beispielweise kann der Sensor 100 so ausgelegt sein, dass er eine geringe aber endliche Sensitivität gegenüber der Ionenart, deren Konzentration gemessen werden soll, aufweist. Der Sensor 100 kann beispielsweise als der eingangs erwähnte, vergleichende Sensor V dienen.

Der Sensor 100 kann beispielsweise ausgelegt sein, um einen Messwert zur Bestimmung einer Ionenkonzentration einer an die zweite Schicht 150 angrenzenden Flüssigkeit zu bestimmen. Der Messwert kann beispielsweise ein Referenzwert oder ein Bezugswert zur Bestimmung einer Ionenkonzentration sein. Zum Bestimmen eines Messwerts kann der Sensor 100 beispielweise ausgelegt sein, um eine Kapazität zwischen der ersten Schicht 110 und der zweiten Schicht 150 zu bestimmen oder um ein Potenzial oder ein elektrisches Feld zwischen der ersten Schicht 110 und der zweiten Schicht 150 zu bestimmen. Die Kapazität oder das Potenzial oder das elektrische Feld können beispielsweise von einer Konzentration von Ionen in einer zu messenden, an die zweite Schicht 150 angrenzenden Flüssigkeit abhängen. Vorzugweise fällt diese Abhängigkeit bei dem Sensor 100 sehr gering aus. Eine Abhängigkeit der Kapazität oder des Potenzials oder des elektrischen Feldes zwischen der ersten Schicht 110 und der zweiten Schicht 150 von der lonenkonzentration in einer an die zweite Schicht angrenzende Flüssigkeit kann beispielsweise von einer Sensitivität der zweiten Schicht gegenüber den in der Flüssigkeit befindlichen Ionen abhängen.

Eine lonensensitivität der zweiten Schicht 150 ist besonders gering, da sie ein Gold-Material und ein Sauerstoff-Material aufweist. Ein Gold-Material kann beispielsweise Gold oder eine Verbindung aus Gold und ein oder mehreren anderen Elementen sein. Ein Sauerstoff-Material kann beispielsweise Sauerstoff oder eine Verbindung aus Sauerstoff und ein oder mehreren anderen Elementen sein. Beispielsweise kann die zweite Schicht 150 ein Gemisch aus Gold und Sauerstoff aufweisen. Alternativ oder zusätzlich kann die zweite Schicht 150 aber auch eine oder mehrere verschiedene Verbindungen zwischen Gold und Sauerstoff, beispielsweise ein Goldoxid, aufweisen.

Die erste Schicht 110 weist ein Halbleitermaterial auf. Ein Halbleitermaterial kann beispielsweise Silicium oder ein anderes Halbleitermaterial sein. Das Halbleitermaterial kann beispielsweise auch dotiert sein, zum Beispiel um eine Ladungsträgerdichte oder eine Leitfähigkeit des Halbleitermaterials anzupassen, zum Bespiel mit Bor, Indium, Aluminium, Gallium, Phosphor, Arsen, Antimon.

Die Festkörper-Sensorstruktur, d.h. der Sensor 100, kann beispielsweise der weniger ionensensible Sensorpart zu einem stärker ionensensiblen Sensorpart und zu einem Erdungspart in flüssigen Medien sein, und die Messung, beispielsweise einer Ionenkonzentration, kann beispielsweise über potentiometrische Messmethoden erfolgen. beispielsweise kann eine Anwendung des Sensorparts, d.h. des Sensor 100, eine Messung einer lonenkonzentration in flüssigen Medien, insbesondere in Wasser-haltigen Medien, sein, indem er speziell als vergleichender Sensor V dienen kann, der beispielsweise nur gering oder minimal auf übliche Ionenkonzentrationen reagiert, wobei übliche Ionenkonzentrationen vorzugsweise eine elektrische Leitfähigkeit einer Ionenlösung zwischen 5 Mikrosiemens und 300 Millisiemens aufweisen.

Es sei darauf hingewiesen, dass der Sensor 100 gemäß Fig. 1 optional um alle Merkmale, Funktionalitäten und Details ergänzt wird, die hier in dem Bezug auf die anderen Sensoren beschrieben sind. Die entsprechenden Merkmale, Funktionalitäten und Details können beispielsweise einzeln oder in Kombination in den Sensor 100 aufgenommen werden.

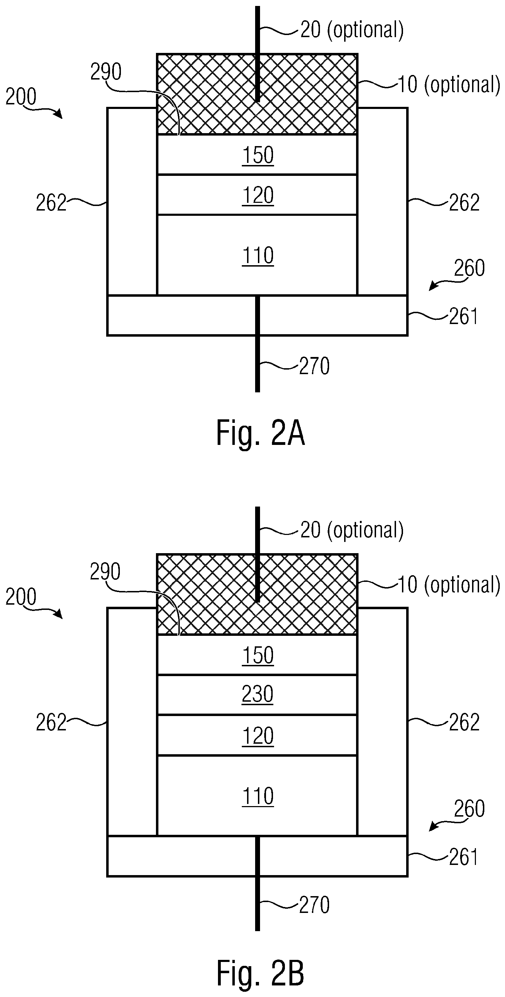

Fig. 2A zeigt eine seitliche Schnittansicht eines Sensors 200 gemäß einem Ausführungsbeispiel. Der Sensor 200 kann beispielsweise dem Sensor 100 aus Abbildung 1 entsprechen. Zum besseren Verständnis der Funktion des Sensors 200, ist der Sensor 200 in einer Messanordnung gezeigt, die neben dem Sensor 200 ein optionales Messvolumen 10 und eine optionale Elektrode 20 aufweist. Der Sensor 200 weist eine erste Schicht 110, eine Isolationsschicht 120 und eine zweite Schicht 150 entsprechend dem in Fig. 1 gezeigten Ausführungsbeispiel auf. Die zweite Schicht 150 weist eine der Isolationsschicht abgewandte Messoberfläche 290 auf. In der gezeigten Messanordnung ist die Messoberfläche 290 in Kontakt mit dem Messvolumen 10, das beispielsweise eine ionenhaltige Flüssigkeit aufweist.

Die zweite Schicht 150 weist einen Sauerstoffanteil zwischen 0,1 % und 67 %, das heißt einen Anteil von Sauerstoffatomen an einer Gesamtzahl an Atomen der zweiten Schicht zwischen 0,1 % und 67 %, auf. Der Sauerstoffanteil der zweiten Schicht 150 kann eine Sensitivität der zweiten Schicht 150 gegenüber in dem Messvolumen 10 vorhandenen Ionen beeinflussen. Ferner kann der Sauerstoffanteil der zweiten Schicht 150 eine Stabilität der zweiten Schicht 150 gegenüber einer in dem Messvolumen 10 vorhandenen Flüssigkeit beeinflussen. Der Sauerstoffanteil der zweiten Schicht 150 kann beispielsweise an eine Verwendung des Sensors 200 angepasst werden, beispielsweise an eine in dem Messvolumen 10 vorhandene Flüssigkeit oder an eine bestimmte, zu messende Ionenart in dem Messvolumen 10.

Gemäß einem Ausführungsbeispiel weist die zweite Schicht 150 ferner, d. h., zusätzlich zu dem Goldmaterial, ein Edelmetall-Material mit von Gold verschiedenen Edelmetallatomen auf. Edelmetallatome in der zweiten Schicht 150 können eine chemische Beständigkeit, das heißt eine Stabilität, der zweiten Schicht 150 gegenüber einer Flüssigkeit, beispielsweise einer ionenhaltigen Flüssigkeit, welche mit der zweiten Schicht 150 in Kontakt steht, erhöhen. Die Edelmetallatome in der zweiten Schicht 150 können beispielsweise Goldatome teilweise ersetzen, so dass ein Sauerstoffanteil der zweiten Schicht 150 unverändert bleibt. Beispielsweise kann ein Sauerstoffanteil der zweiten Schicht 150 zwischen 0,1 % und 67 % liegen, wobei die zweite Schicht 150 ein Gold-Material und ein Edelmetall-Material mit von Gold verschiedenen Edelmetallatomen aufweist.

Gemäß einem Ausführungsbeispiel beträgt die Anzahl der von Gold verschiedenen Edelmetallatome in der zweiten Schicht 150 maximal 25 % der Anzahl von Goldatomen in der zweiten Schicht 150.

Die zweite Schicht 150 weist eine Dicke zwischen 5 nm und 10 µm auf. Die Dicke der zweiten Schicht 150 ist beispielsweise eine Dimension der zweiten Schicht 150 in einer Richtung senkrecht zu der zweiten Schicht 150. Die Dicke der zweiten Schicht 150 kann beispielsweise an einen Sauerstoffanteil der zweiten Schicht 150 angepasst sein. Ist beispielsweise die zweite Schicht 150 durch große Kristalle geprägt, beispielsweise aufgrund eines hohen Sauerstoffanteils in der zweiten Schicht 150, kann eine Dicke der zweiten Schicht 150 von einigen Mikrometern erforderlich sein, da zwar die Kristalle nur wenige Nanometer tief von dem zu messenden Medium, beispielsweise einer im Messvolumen 10 befindlichen Flüssigkeit, beeinflusst werden kann, aber Korngrenzen der Kristalle der zweiten Schicht 150 viel tiefer unter die Oberfläche der zweiten Schicht 150 reichen. Beispielsweise kann sich das Medium entlang der Korngrenzen der Kristalle in der zweiten Schicht 150 bewegen, wodurch das Medium im Falle großer Kristalle in der zweiten Schicht 150 sehr tief unter eine Oberfläche der zweiten Schicht 150, beispielsweise einer an das Messvolumen 10 angrenzenden Oberfläche der zweiten Schicht 150, eindringen kann. Im Falle einer hohen Kristallinität oder großer Kristalle der zweiten Schicht 150 kann hingegen auch eine geringe Dicke der zweiten Schicht 150 gewählt werden, da die zu messende Flüssigkeit im Falle großer Kristalle der zweiten Schicht 150 weniger tief in die zweite Schicht 150 eindringen kann. Für die Ausbildung einer für den Stoff charakteristischen lonensensivität können bereits wenige Nanometer Oberflächentiefe ausreichend sein, d.h. für Größe und Charakteristik der lonensensibilität der Sensorschicht (eines Festkörpersensors mit über den Feldeffekt wirkenden Struktur), d.h. der zweiten Schicht 150, können, als minimale Schichtdicke nur wenige Angstrom bis einige Nanometer der Oberfläche zuständig sein. Bei einer Temperatur, höher als 30°C können mit wachsender Temperatur bis zu einigen 10 Nanometer Oberflächentiefe an der Potentialbildung beteiligt sein.

Gemäß einem Ausführungsbeispiel weist eine Sauerstoffkonzentration der zweiten Schicht 150 einen Gradienten in einer Richtung senkrecht zu der zweiten Schicht 150 auf. Beispielsweise kann die Sauerstoffkonzentration der zweiten Schicht 150 an einer der Isolationsschicht 120 zugewandten Oberfläche der zweiten Schicht 150 größer sein als in der Mitte (bezogen auf eine Richtung senkrecht zu der zweiten Schicht) der zweiten Schicht 150 sein. Die Sauerstoffkonzentration kann von der Mitte der zweiten Schicht 150 zur Oberfläche, d.h. zur Messoberfläche 290 hin, auch wieder zunehmen. Eine hohe Sauerstoffkonzentration der zweiten Schicht 150 an einer der Isolationsschicht 120 zugewandten Oberfläche kann beispielsweise eine Haftung zwischen der zweiten Schicht 150 und der Isolationsschicht 120 erhöhen. Ändert sich die Sauerstoffkonzentration der zweiten Schicht 150 entlang einer Richtung senkrecht zu der zweiten Schicht 150, kann sich auch eine elektrische Leitfähigkeit in der zweiten Schicht entlang dieser Richtung ändern, wobei eine Qualität des Sensors, beispielsweise eine Sensorperformance, davon unbeeinflusst bleiben kann, da für die Qualität des Sensors beispielsweise die Isolationsschicht 120 entscheidend sein kann, da diese für einen Feldeffekt, beispielsweise zwischen der zweiten Schicht 150 und der ersten Schicht 110, entscheidend sein kann. Beispielsweise kann die zweite Schicht 150 an einer dem Messvolumen 10 zugewandten Oberfläche, das heißt einer der Isolationsschicht 120 abgewandten Oberfläche, eine andere Sauerstoffkonzentration aufweisen als an einer der Isolationsschicht 120 zugewandten Oberfläche.

Somit kann beispielsweise für die der Isolationsschicht 120 zugewandten Oberfläche eine hohe Sauerstoffkonzentration gewählt werden, um die Haftung der zweiten Schicht 150 auf der Isolationsschicht 120 zu erhöhen, und für die der Isolationsschicht 120 abgewandten Oberfläche der zweiten Schicht 150 eine geringere Sauerstoffkonzentration gewählt werden, beispielsweise um eine Kristallinität der zweiten Schicht 150 oder eine Ionensensitivität der zweiten Schicht 150 oder eine Stabilität, das heißt eine chemische oder thermische Beständigkeit, der zweiten Schicht 150 anzupassen.

Die Isolationsschicht 120 kann ein elektrisch und/oder ionisch isolierendes Material aufweisen, beispielsweise ein Dielektrikum, beispielsweise Siliciumdioxid, Siliziumnitrid oder ein Material mit einer vergleichbaren oder höheren Dielektrizitätszahl. Dadurch kann eine Kapazität oder ein Potenzial oder ein Feldeffekt zwischen der zweiten Schicht 150 und der ersten Schicht 110 erhöht werden, was zu einer besseren Genauigkeit des Sensors 200 führen kann.

Gemäß einem Ausführungsbeispiel weist die Isolationsschicht 120 in einer Richtung senkrecht zu der Isolationsschicht 120 einen elektrischen Widerstand größer als 10 GΩ oder größer als 100 GΩ auf. Ein besonders hoher Widerstand der Isolationsschicht 120 kann einen Leckstrom zwischen der ersten Schicht 110 und der zweiten Schicht 150 verringern oder verhindern, was zu einer besseren Qualität oder Genauigkeit des Sensors 200 führen kann.

Die Isolationsschicht 120 ist an eine Hauptoberfläche der ersten Schicht 110 angrenzend angeordnet. Ferner ist die zweite Schicht 150 der Hauptoberfläche der ersten Schicht 110 gegenüberliegend, an die Isolationsschicht 120 angrenzend angeordnet.

Der Sensor 200 weist einen elektrisch leitfähigen Kontakt 270 auf, der mit der ersten Schicht 110 elektrisch leitfähig verbunden ist.

Der elektrisch leitfähige Kontakt 270 kann beispielsweise in Kombination mit der Elektrode 20 dazu benutzt werden, um ein Potenzial der zweiten Schicht 150 beziehungsweise des Messvolumens 10 gegenüber der ersten Schicht 110 zu messen. Eine solche Messung kann beispielsweise über die CV-Messung ("Capacity-Voltage"-Messung oder Kapazitäts-Spannungs-Spektroskopie) erfolgen.

Gemäß einem Ausführungsbeispiel weist der Sensor 200 eine geringe Ionensensitivität auf, beispielsweise eine lonensensitivität geringer als 46mV/p(lon) bei 25°C, oder eine um mehr als 8% geringere Sensorsteilheit als die Nernst-Steilheit bei jeder Messtemperatur , wobei p(lon) beispielsweise eine Konzentration des zu messenden Ions in einer mit der Messoberfläche 290 in Kontakt stehenden Flüssigkeit ist. Dadurch kann ein von dem Sensor 200 bereitgestellter Messwert beispielsweise besonders gut als Bezugswert oder Referenzwert benutzt werden, um in Kombination mit einem ionensensitiven Sensor, der beispielsweise auf eine bestimmte Ionenart sensitiv ist, eine Konzentration einer Ionenart in einer in dem Messvolumen 10 befindlichen Flüssigkeit zu bestimmen.

Der Sensor 200 weist ferner eine Abdichtstruktur 260 auf. Die Abdichtstruktur 260 ist derart angeordnet, dass sie eine der ersten Schicht 110 abgewandte Messoberfläche 290 der zweiten Schicht 150 räumlich von der ersten Schicht 110 trennt. Daher ist die Abdichtstruktur 260 ausgestaltet, um einen ionisch und/oder elektrisch leitfähigen Kontakt zwischen der Messoberfläche 290 und der ersten Schicht 110 durch eine Flüssigkeit zu verhindern. Die Abdichtstruktur 260 ist undurchlässig und resistent gegenüber sauren und/oder basischen Flüssigkeiten. In einer Messanordnung, beispielsweise der in Fig. 2A dargestellten Messanordnung, befindet sich der Sensor 200 in Kontakt mit einer Flüssigkeit, beispielsweise einer in dem Messvolumen 10 befindlichen Flüssigkeit.

Die Abdichtstruktur 260 kann beispielsweise eine seitliche Abdichtstruktur 262 aufweisen. Die seitliche Abdichtstruktur 262 kann beispielsweise so angeordnet sein, dass sie die Festkörper-Schichtstruktur des Sensors 200 in einer Richtung parallel zu der Festkörper-Schichtstruktur begrenzt. Beispielsweise kann die seitliche Abdichtstruktur 262 derart angeordnet sein, dass sie eine freiliegende Nebenoberfläche der Isolationsschicht 120 vollständig bedeckt. Ferner kann die seitliche Abdichtstruktur 262 derart ausgelegt sein, dass sie eine freiliegende Oberfläche der ersten Schicht 110, die der Isolationsschicht 120 weder zugewandt noch abgewandt ist, vollständig bedeckt. Eine Oberfläche kann beispielsweise als freiliegend bezeichnet werden, wenn kein Festkörper-Material, beispielsweise ein elektrischer Kontakt, an die Oberfläche angrenzt. Die Abdichtstruktur 260 kann ferner eine laterale Abdichtstruktur 261 aufweisen. Die laterale Abdichtstruktur 261 kann beispielsweise an einer der Isolationsschicht 120 abgewandten Oberfläche der ersten Schicht 110 angrenzend angeordnet sein. Die laterale Abdichtstruktur 261 kann beispielsweise an einen freiliegenden Teil einer der Isolationsschicht 120 abgewandten Oberfläche der ersten Schicht 110 angrenzend angeordnet sein, beispielsweise einem Teil dieser Oberfläche, der nicht von einem elektrischen Kontakt oder einem anderen Festkörper-Material, beispielsweise dem elektrischen Kontakt 270, bedeckt ist.

Damit sich ein Potenzial oder eine Kapazität oder ein elektrisches Feld zwischen der ersten Schicht 110 und der zweiten Schicht 150 ausbilden kann, sind die erste Schicht 110 und die zweite Schicht 150 elektrisch und/oder ionisch voneinander isoliert oder zumindest so angeordnet, dass ein elektrischer Widerstand von mehr als 10 GΩ zwischen der ersten Schicht 110 und der zweiten Schicht 150 vorliegt. Da der Sensor 200 in der Regel in einer Flüssigkeit betrieben werden soll, ist es die Aufgabe der Abdichtstruktur 260, einen Kontakt der Flüssigkeit mit der ersten Schicht 110 zu verhindern, um einen elektrischen Kontakt zwischen der ersten Schicht 110 und der zweiten Schicht 150 durch die Flüssigkeit zu vermeiden. Vorteilhafterweise verhindert die Abdichtstruktur 260 ferner einen fluidischen oder mechanischen oder elektrischen Kontakt zwischen der Flüssigkeit und der Isolationsschicht 120.

Fig. 2B zeigt ein seitliches Schnittbild des Sensors 200 in einer Messanordnung gemäß einem Ausführungsbeispiel. Die Messanordnung umfasst den Sensor 200. Ferner umfasst die Messanordnung das Messvolumen 10 sowie die Elektrode 20. Der Sensor 200 entspricht dem in Fig. 2A gezeigten Sensor 200, und kann alle im Zusammenhang mit dem Sensor 200 in Fig. 2A beschriebenen Merkmale und Funktionalitäten aufweisen. Gemäß dem in Fig. 2B gezeigten Ausführungsbeispiel, weist der Sensor 200 zusätzlich eine zwischen der Isolationsschicht 120 und der zweiten Schicht 150 angeordnete elektrisch und/oder ionisch leitfähige Zwischenschicht 230 auf.

Die Isolationsschicht 120 ist an eine Hauptoberfläche der ersten Schicht 110 angrenzend angeordnet. Ferner ist die Zwischenschicht 230 der Hauptoberfläche der ersten Schicht 110 gegenüberliegend an die Isolationsschicht 120 angrenzend angeordnet. Abweichend zu dem in Fig. 2A gezeigten Ausführungsbeispiel ist bei dem in Fig. 2B gezeigten Ausführungsbeispiel die zweite Schicht 150 der Isolationsschicht 120 gegenüberliegend, an die Zwischenschicht 230 angrenzend angeordnet.

Gemäß einem Ausführungsbeispiel weist die Zwischenschicht 230 eine Dicke zwischen 5 nm und 10 µm auf.

Gemäß einem Ausführungsbeispiel weist die Zwischenschicht 230 in einer Richtung senkrecht zur Zwischenschicht 230 einen elektrischen Widerstand kleiner als 100 MΩ auf.

Beispielsweise ist die Zwischenschicht 230 derart ausgelegt, dass Ladungsträger, beispielsweise Elektronen, in der Zwischenschicht 230 möglichst beweglich sind. Dies kann beispielsweise durch einen geringen elektrischen Widerstand gewährleistet werden. Eine hohe Beweglichkeit von Ladungsträgern in der Zwischenschicht 230 kann gewährleisten, dass eine in der zweiten Schicht 150 auftretende Polarisierung, beispielsweise hervorgerufen durch Ionen an der Messoberfläche 290, eine ähnliche Polarisierung in der Zwischenschicht 230 erzeugt, so dass eine Kapazität des Sensors 200 zwischen der ersten Schicht 110 und der zweiten Schicht 150 bzw. der Zwischenschicht 230 aufgrund der Zwischenschicht 230 nicht oder nur geringfügig vergrößert wird.

Die Funktion der Zwischenschicht 230 besteht beispielsweise darin, eine Haftung zwischen der zweiten Schicht 150 und der Isolationsschicht 120 zu gewährleisten. Beispielsweise kann eine Haftung eines Gold-Materials auf der Isolationsschicht 120 sehr gering sein. Aufgrund der Zwischenschicht 230 kann beispielsweise eine Haftung der zweiten Schicht 150 an der Festkörper-Schichtstruktur verbessert oder hergestellt werden.

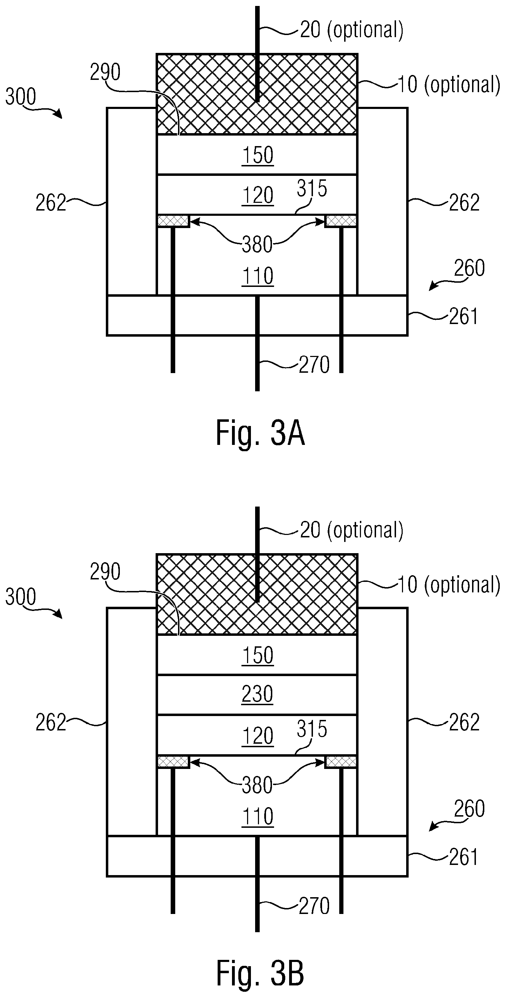

Fig. 3A zeigt eine Schnittansicht eines Sensors 300 gemäß einem Ausführungsbeispiel in einer Messanordnung. Zusätzlich zu dem Sensor 300 umfasst die Messanordnung ein Messvolumen 10 sowie eine Elektrode 20. Der Sensor 300 kann beispielsweise dem Sensor 100, 200 entsprechen. Der Sensor 300 umfasst eine erste Schicht 110, eine zweite Schicht 150, eine Isolationsschicht 120, eine Abdichtstruktur 260 und einen elektrischen Kontakt 270 entsprechend des in der Fig. 2A beschriebenen Sensors 200. Zusätzlich weist der Sensor 300 eine Mehrzahl von Messkontakten 380 auf, die mit der ersten Schicht 110 elektrisch leitfähig verbunden sind. Die Messkontakte 380 sind an eine der zweiten Schicht 150 zugewandten Hauptoberfläche 315 der ersten Schicht 110 angrenzend angeordnet.

Die Mehrzahl von Messkontakten 380 kann beispielsweise eine Messung nach dem Prinzip des Feldeffekttransistors (FET) ermöglichen. Beispielsweise kann eine Änderung einer Ionenkonzentration in dem an die Messoberfläche 290 der zweiten Schicht 150 angrenzenden Messvolumen 10 eine Änderung eines Potenzials zwischen der ersten Schicht 110 und der zweiten Schicht 150 hervorrufen. Diese Potenzialänderung kann mittels eines Feldeffekts wiederum eine Konzentration von Ladungsträgern in einem an die Hauptoberfläche 315 der ersten Schicht angrenzenden Bereich in der ersten Schicht 110 führen. Eine solche Änderung der Ladungsträgerdichte kann mittels der Mehrzahl von Messkontakten 380 detektiert werden. Beispielsweise kann die Mehrzahl von Messkontakten 380 dazu verwendet werden, einen elektrischen Widerstand oder eine elektrische Leitfähigkeit zu bestimmen, was eine Messung einer elektrischen Spannung oder eines elektrischen Stroms umfassen kann. Eine Bestimmung des elektrischen Widerstands oder der elektrischen Leitfähigkeit in der ersten Schicht 110 kann beispielsweise mit zwei, drei oder vier Messkontakten 380 durchgeführt werden.

Der elektrische Kontakt 270 kann in einer Messung nach dem FET Prinzip dazu benutzt werden, einen passenden Arbeitspunkt zu wählen, beispielsweise ein Potential, an dem der Sensor eine geeignete Steilheit aufweist, beispielsweise eine besonders hohe Steilheit. Zu diesem Zweck kann beispielsweise eine Spannung zwischen dem elektrischen Kontakt 270 und der Elektrode 20 angelegt werden.

Die Mehrzahl von Messkontakten 380 kann beispielsweise als hochdotierte Bereiche in der ersten Schicht 110 ausgeführt sein. Hochdotiert kann dabei heißen, dass sie eine höhere Dotierung als das Halbleitermaterial der ersten Schicht 110 aufweisen. Die Mehrzahl von Messkontakten 380 können ferner einen metallischen Leiter aufweisen.

Fig. 3B zeigt eine Schnittansicht des Sensors 300 gemäß einem Ausführungsbeispiel in einer Messanordnung. Die Messanordnung umfasst zusätzlich zu dem Sensor 300 das optionale Messvolumen 10 und die optionale Elektrode 20. Das in Fig. 3B gezeigte Ausführungsbeispiel des Sensors 300 kombiniert die Eigenschaften des in Fig. 3A gezeigten Ausführungsbeispiels des Sensors 300, insbesondere die Mehrzahl von Messkontakten 380, mit den Eigenschaften des in Fig. 2B gezeigten Sensors 200, insbesondere der Zwischenschicht 230. Der Sensor 300 kann alle Merkmale, Funktionen und Vorteile des Sensors 200 einzeln oder in Kombination zueinander aufweisen.

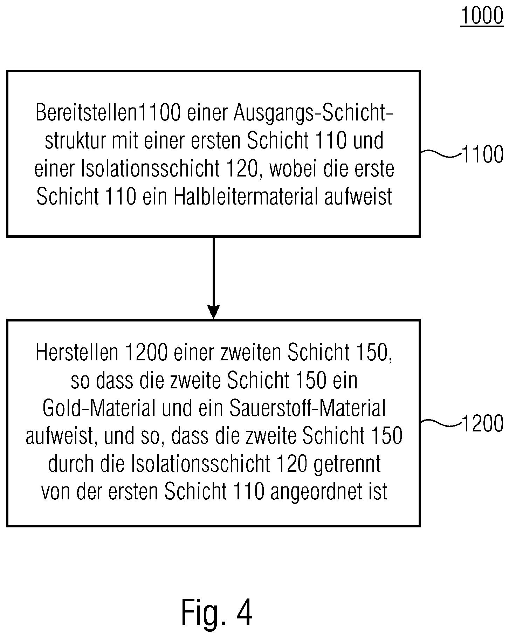

Fig. 4 zeigt ein Flussdiagramm eines Verfahrens 1000 zur Herstellung eines Sensors 100, 200, 300 gemäß einem Ausführungsbeispiel. Der Schritt 1100 des Verfahrens 1000 umfasst ein Bereitstellen einer Ausgangs-Schichtstruktur mit einer ersten Schicht 110 und einer Isolationsschicht 120, wobei die erste Schicht 110 ein Halbleitermaterial aufweist. Der Schritt 1200 des Verfahrens 1000 umfasst ein Herstellen einer zweiten Schicht 150, so dass die zweite Schicht 150 ein Gold-Material und ein Sauerstoff-Material aufweist, und so dass die zweite Schicht 150 durch die Isolationsschicht 120 getrennt von der ersten Schicht 110 angeordnet ist.

Beispielsweise wird auf der ersten Schicht 110, beispielsweise auf einem Halbleitersubstrat, beispielsweise Silicium, ein Isolator, beispielsweise die Isolationsschicht 120, erzeugt. Auf der Isolationsschicht 120, beispielsweise dem Isolator, wird eine zweite Schicht erzeugt, die Gold mit einer Sauerstoffkonzentration zwischen 0,1 % und 67 % aufweist. Optional kann vor der Gold-Sauerstoff-Schichterzeugung, beispielsweise dem Herstellen 1200 der zweiten Schicht 150, eine elektrisch leitende Schicht, beispielsweise die Zwischenschicht 230, erzeugt werden. Für den Einsatz in wässrigen Medien ist es vorteilhaft, die Rückseite des Halbleitersubstrats, das heißt eine der zweiten Schicht 150 abgewandte Hauptoberfläche der ersten Schicht 110 und eine Seite des Halbleitersubstrats, das heißt eine Nebenoberfläche der ersten Schicht 110, vor den wässrigen Medien, beispielsweise dem Messvolumen 10, mit einer stabilen Isolation, beispielsweise der Abdichtstruktur 260, zu schützen. Die Kontaktierung, beispielsweise die elektrische Kontaktierung, die für eine Messung eines Potenzials oder einer Kapazität oder eines Feldeffekts zwischen der ersten Schicht 110 und der zweiten Schicht 150 notwendig ist, beispielsweise die Kontaktierung für die EIS CV-Messung an der EIS (electrolyte-insulator-semiconductor)-Struktur erfolgt über einen elektrisch leitfähigen Kontakt 270, beispielsweise einen Metallkontakt, an der ersten Schicht 110, beispielsweise dem Halbleitersubstrat, und über einen niederohmigen Kontakt 20 direkt in ein leitfähiges Messmedium, beispielsweise ein in dem Messvolumen 10 befindliches Messmedium. Die Kontaktierung für eine Feldeffekttransistorstruktur, beispielsweise den Sensor 300, erfolgt über die Mehrzahl von Messkontakten 380, beispielsweise eine Mehrzahl von Metallkontakten, sowie dem elektrisch leitfähigen Kontakt 270, beispielsweise einen Metall-Halbleitersubstrat-Kontakt, sowie über einen niederohmigen Kontakt, beispielsweise die Elektrode 20, direkt in das leitfähige Messmedium, welches sich beispielsweise in dem Messvolumen 10 befindet.

Beispielsweise kann zum Zweck einer Einstellung eines bestimmten charakteristischen Verhaltens der Sensorschicht gegenüber speziellen Komplexionen, Fremdatome, das heißt von Goldatomen und Sauerstoffatomen verschiedene Atome, der zweiten Schicht 150 zugefügt werden, wobei aber vorzugsweise die Konzentration von Goldatomen in der zweiten Schicht 150 größer ist als die Konzentration der zugefügten Fremdatome in der zweiten Schicht 150.

Beispielsweise kann das Herstellen der zweiten Schicht 150 so erfolgen, dass die zweite Schicht einen spezifischen Sauerstoffanteil aufweist, so dass eine lonensensitivität des Sensors 100, 200, 300 einen von dem Sauerstoffanteil mitbestimmten Wert aufweist. Ein hoher Anteil des Sauerstoff-Materials in der zweiten Schicht wirkt sich beispielsweise besonders vorteilhaft auf die Insensitivität der zweiten Schicht gegenüber Ionen aus. Ferner kann das Verfahren 1000 optional ein Formieren der zweiten Schicht 150 umfassen, wobei das Formieren beispielsweise in einer wässrigen Lösung erfolgen kann und wobei das Formieren beispielsweise so erfolgt, dass der Sauerstoffanteil der zweiten Schicht erhöht wird, so dass der Sauerstoffanteil beispielsweise einen auf eine Anwendung des Sensors 100, 200, 300 angepassten Wert aufweist.

In anderen Worten, das Herstellen 1200 der zweiten Schicht 150 kann optional ein Einstellen einer lonensensitivität des Sensors 100, 200, 300 umfassen.

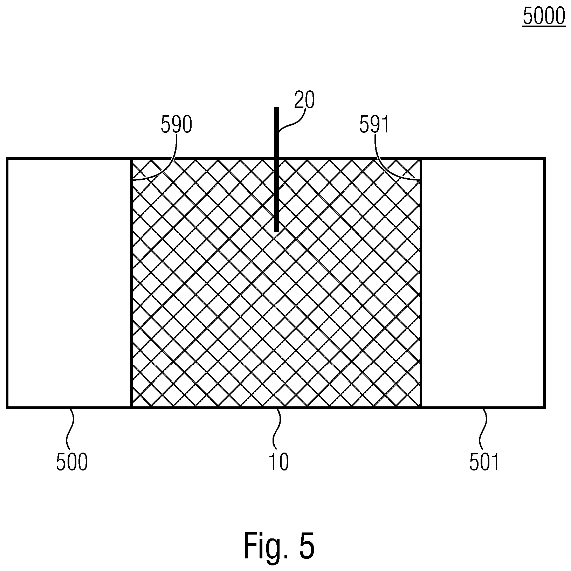

Fig. 5 zeigt eine schematische Darstellung eines Sensorsystems 5000 gemäß einem Ausführungsbeispiel. Das Sensorsystem 5000 weist einen Sensor 500 auf, bei dem es sich beispielsweise um den Sensor 100, 200, 300 handeln kann. Der Sensor 500 weist eine Messoberfläche 590 auf. Bei der Messoberfläche 590 handelt es sich beispielsweise um die Messoberfläche 290. Das Messsystem 5000 weist ferner einen ionensensitiven Sensor 501 mit einem ionensensitiven Sensorbereich 591 auf. Ferner weist das Sensorsystem 5000 ein an die Messoberfläche 590 des Sensors 500 und den ionensensitiven Sensorbereich 591 des ionensensitiven Sensors 501 angrenzendes Messvolumen 10 auf. Ferner weist das Sensorsystem 5000 einen Erdungskontakt 20 auf, wobei der Erdungskontakt 20 an das Messvolumen 10 angrenzend oder zumindest teilweise innerhalb des Messvolumens 10 angeordnet ist. Die in Abbildung 5 gezeigte Anordnung, d.h. die Position und die Orientierung, des Sensors 500 und des Sensors 501, bzw. der Messoberfläche 590 und des ionensensitiven Sensorbereichs 591, ist beispielhaft zu verstehen.

Das Messvolumen 10 kann beispielsweise ausgelegt werden, um eine Flüssigkeit aufzunehmen, deren Ionenkonzentration, beispielsweise eine Konzentration einer bestimmten Ionenart, bestimmt werden soll. Der ionensensitive Sensorbereich 591 ist typischerweise sensitiv auf die zu bestimmende Ionenart. Um aus einem Messwert des ionensensitiven Sensors 501 eine Ionenkonzentration zu bestimmen, wird typischerweise ein Vergleichswert oder ein Referenzwert benötigt, der beispielsweise von einem weniger ionensensitiven Sensor, typischerweise gleichzeitig und in derselben Flüssigkeit, gemessen wird. Der Sensor 500 kann besonders gut geeignet sein, einen solchen Referenzwert oder Bezugswert oder Vergleichswert bereitzustellen, da er eine besonders geringe Sensitivität, vorzugsweise eine minimale Sensitivität, gegenüber der zu messenden Ionenart aufweist. Der Erdungskontakt 20 hat unter Messbedingungen einen elektrischen Kontakt zu einer zu messenden Flüssigkeit. Somit kann der Erdungskontakt 20 eine elektrische Aufladung vermeiden. Der Erdungskontakt 20 kann beispielsweise ein Metallkontakt sein beziehungsweise ein Metall aufweisen. Die Messoberfläche 590 ist beispielsweise eine Oberfläche der zweiten Schicht des Sensors 500. Typischerweise weist die zweite Schicht des Sensors 500 eine geringere Sensitivität gegenüber einem zu detektierenden Ion auf, als ein Material des ionensensitiven Sensorbereichs des ionensensitiven Sensors.

Beispielsweise ist die Festkörper-Sensorstruktur 500 der weniger ionensensible Sensorpart zu dem stärker ionensensiblen Sensorpart 501 und zu dem Erdungskontakt 20 in flüssigen Medien, und eine Messung erfolgt über potentiometrische Messmethoden.

Ist die lonensensitivität eines Sensors, beispielsweise des Sensors 500, kleiner als 40mV/p(Ionₓ) im Vergleich zu einem Sensor mit mehr als 55mV/p(Ionₓ), beispielsweise des Sensors 501, kann aus einer Sensorsignaldifferenz eine Änderung der Ionenkonzentration des Ionₓ bei Änderung eines Messmediums, beispielsweise in dem Messvolumen 10, bestimmt werden: ( p(Ionₓ)= -Ig a_{Ionx} = -Ig (C_{Ionx} · f_{Ionx}), a ist die Aktivität, c die Konzentration, f die Aktivitätskoeffizient, x beliebige Ionenart). Als solcher Vergleichssensor sollte die Sensitivität gegenüber den Ion x minimal sein.

Die Erfindung kann ferner durch folgende Ausführungsbeispiele realisiert werden:
Ein Ausführungsbeispiel umfasst ein Sensorsystem, folgende Elemente aufweisend: ein Sensor 100;200;300;500, wobei die zweite Schicht 150 des Sensors 100;200;300;500 eine der ersten Schicht 110 des Sensors abgewandte Messoberfläche 290 aufweist; ein ionensensitiver Sensor 501 mit einem ionensensitiven Sensorbereich 591; ein an die Messoberfläche 590 des Sensors 500 und den ionensensitiven Sensorbereich 591 des ionensensitiven Sensors 501 angrenzendes Messvolumen 10;ein Erdungskontakt (20), wobei der Erdungskontakt 20 an das Messvolumen 10 angrenzend oder zumindest teilweise innerhalb des Messvolumens 10 angeordnet ist.

Ein weiteres Ausführungsbeispiel umfasst das beschriebene Sensorsystem, wobei der ionensensitive Sensor 501 eine Festkörperstruktur aufweist und/oder wobei der Erdungskontakt 20 ein Metall aufweist.

Alternativ oder zusätzlich weist die zweite Schicht 150 des Sensors 100;200;300;500 eine geringere Sensitivität gegenüber einem zu detektierenden Ion auf als ein Material des ionensensitiven Sensorbereichs 591 des ionensensitiven Sensors 501.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen

[1] M.Fujihira et.al., J. Electroanal. Chem. 106, 413, (1980)
[2] H.-S.Wong and M.White, IEEE Trans. Electron Devices 36, 479, (1989)
[3] D.Wilhelm et.al., Sensors and Actuators B4, 145, (1991)
[4] V.Rocher et.al., J. Electrochem. Soc. 141, 535, (1994)
[5] T.Matsuo and H.Nakajima, Sensors and Actuators 5, 293, (1984)
[6] Van Den Berg et.al.Sensors and Actuators 8, 129, (1985)
[7] P.Bergveld et.al., Sensors and Actuators 18, 309, (1989)
[8] M.Chudy et.al. Sensors and Actuator B57, 47, (1999)
[9] H.-S.Wong, Dissertation, Lehigh University 1988
[10] M.Zabarowski et.al., Przeglad Elektrotechniczny 2014,R,90, 11, 142
[11] R. Brdička, Grundlagen der physikalischen Chemie, 10.aufl., VEB deutscher Verlag der Wissenschaften, Berlin 1971

## Patentansprüche

1. Sensor (100;200;300;500) mit einer Festkörper-Schichtstruktur, folgende Elemente aufweisend:
eine erste Schicht (110), die ein Halbleitermaterial aufweist;
eine zweite Schicht (150), die ein Gold-Material und ein Sauerstoff-Material aufweist,
eine zwischen der ersten Schicht (110) und der zweiten Schicht (150) angeordnete Isolationsschicht (120), wobei die zweite Schicht durch die Isolationsschicht getrennt von der ersten Schicht angeordnet ist,
wobei die zweite Schicht (150) eine der Isolationsschicht abgewandte Messoberfläche (290) aufweist,
wobei die zweite Schicht (150) eine Dicke zwischen 5 nm und 10 µm aufweist,
wobei die zweite Schicht (150) einen Sauerstoffanteil zwischen 0,1 at% und 67 at% aufweist, und
wobei ein gemeinsamer Gesamtanteil aus Sauerstoffatomen einerseits und Edelmetallatomen umfassend Goldatome andererseits an der zweiten Schicht (150) mindestens 99 at% beträgt.

2. Sensor (100;200;300;500) gemäß Anspruch 1, wobei die zweite Schicht (150) ferner ein Edelmetall-Material mit von Gold verschiedenen Edelmetallatomen aufweist.

3. Sensor (100;200;300;500) gemäß Anspruch 2, wobei die Anzahl der von Gold verschiedenen Edelmetallatome in der zweiten Schicht (150) maximal 25 % der Anzahl von Goldatomen in der zweiten Schicht (150) beträgt.

4. Sensor (100;200;300;500) gemäß einem der vorhergehenden Ansprüche, wobei eine Sauerstoffkonzentration der zweiten Schicht (150) einen Gradienten in einer Richtung senkrecht zu der zweiten Schicht (150) aufweist.

5. Sensor (100;200;300;500) gemäß einem der vorhergehenden Ansprüche, ferner eine Mehrzahl von Messkontakten (380) aufweisend, die mit der ersten Schicht (110) elektrisch leitfähig verbunden sind, wobei die Messkontakte (380) an eine der zweiten Schicht (150) zugewandten Hauptoberfläche der ersten Schicht (110) angrenzend angeordnet sind.

6. Sensor (100;200;300;500) gemäß einem der vorhergehenden Ansprüche, wobei die Festkörper-Schichtstruktur ferner eine zwischen der Isolationsschicht (120) und der zweiten Schicht (150) angeordnete elektrisch und/oder ionisch leitfähige Zwischenschicht (230) aufweist.

7. Sensor (100;200;300;500) gemäß Anspruch 6, wobei die Zwischenschicht (230) eine Dicke zwischen 5 nm und 10 µm aufweist.

8. Sensor (100;200;300;500) gemäß einem der Ansprüche 6 oder 7, wobei die Zwischenschicht (230) in einer Richtung senkrecht zur Zwischenschicht (230) einen elektrischen Widerstand kleiner als 100 MOhm aufweist.

9. Sensor (100;200;300;500) gemäß einem der Ansprüche 1-5,
wobei die Isolationsschicht (120) an eine Hauptoberfläche der ersten Schicht (110) angrenzend angeordnet ist, und
wobei die zweite Schicht (150) der Hauptoberfläche der ersten Schicht (110) gegenüberliegend, an die Isolationsschicht (120) angrenzend angeordnet ist.

10. Sensor (100;200;300;500) gemäß einem der Ansprüche 6-8,
wobei die Isolationsschicht (120) an eine Hauptoberfläche der ersten Schicht (110) angrenzend angeordnet ist, und
wobei die Zwischenschicht (230) der Hauptoberfläche der ersten Schicht (110) gegenüberliegend, an die Isolationsschicht (120) angrenzend angeordnet ist, und
wobei die zweite Schicht (150) der Isolationsschicht (120) gegenüberliegend, an die Zwischenschicht (230) angrenzend angeordnet ist.

11. Sensor (100;200;300;500) gemäß einem der vorhergehenden Ansprüche, wobei der Sensor (100;200;300;500) ferner eine Abdichtstruktur (260) aufweist,
wobei die Abdichtstruktur derart angeordnet ist, dass sie eine der ersten Schicht (110) abgewandte Messoberfläche (290) der zweiten Schicht (150) räumlich von der ersten Schicht (110) trennt,
wobei die Abdichtstruktur ausgestaltet ist, um einen ionisch und/oder elektrisch leitfähigen Kontakt zwischen der Messoberfläche (290) und der ersten Schicht (110) durch eine Flüssigkeit zu verhindern, und
wobei die Abdichtstruktur (260) undurchlässig und resistent gegenüber sauren und/oder basischen Flüssigkeiten ist.

12. Sensor (100;200;300;500) gemäß einem der vorhergehenden Ansprüche, wobei der Sensor (100;200;300;500) ferner einen elektrisch leitfähigen Kontakt (270) aufweist, der mit der ersten Schicht (110) elektrisch leitfähig verbunden ist.

13. Sensor (100;200;300;500) gemäß einem der vorhergehenden Ansprüche, wobei die Isolationsschicht ausgebildet ist, um die erste Schicht gegenüber der zweiten Schicht elektrisch zu isolieren.

14. Sensorsystem (5000), aufweisend:
den Sensor (100;200;300;500) gemäß einem der vorhergehenden Ansprüche;
einen ionensensitiven Sensor (501) mit einem ionensensitiven Sensorbereich (591);
eine an die Messoberfläche (290, 590) des Sensors (100;200;300;500) und den ionensensitiven Sensorbereich (591) des ionensensitiven Sensors (501) angrenzendes Messvolumen (10);
einen Erdungskontakt (20), wobei der Erdungskontakt an das Messvolumen angrenzend oder innerhalb des Messvolumens angeordnet ist.

15. Verfahren (1000) zur Herstellung eines Sensors (100;200;300;500), folgende Schritte aufweisend:
Bereitstellen (1100) einer Ausgangs-Schichtstruktur mit einer ersten Schicht (110) und einer Isolationsschicht (120), wobei die erste Schicht (110) ein Halbleitermaterial aufweist;
Herstellen (1200) einer zweiten Schicht (150),
so dass die zweite Schicht (150) ein Gold-Material und ein Sauerstoff-Material aufweist,
so dass zweite Schicht (150) einen Sauerstoffanteil zwischen 0,1 at% und 67 at% aufweist,
so dass die zweite Schicht (150) eine Dicke zwischen 5 nm und 10 µm aufweist, und
so dass die zweite Schicht (150) eine der Isolationsschicht abgewandte Messoberfläche (290) aufweist,
so dass ein gemeinsamer Gesamtanteil aus Sauerstoffatomen einerseits und Edelmetallatomen umfassend Goldatome andererseits an der zweiten Schicht (150) mindestens 99 at% beträgt, und
so dass die zweite Schicht (150) durch die Isolationsschicht (120) getrennt von der ersten Schicht (110) angeordnet ist.

## Claims

1. Sensor (100;200;300;500) having a solid-state layered structure, comprising the following elements:
a first layer (110) comprising a semiconductor material;
a second layer (150) comprising a gold material and an oxygen material,
an insulation layer (120) arranged between the first layer (110) and the second layer (150), wherein the second layer is arranged to be separated from the first layer by the insulation layer,
wherein the second layer (150) comprises a measurement surface (290) that faces away from the insulation layer,
wherein the second layer (150) comprises a thickness of between 5 nm and 10 µm, or
wherein the second layer (150) comprises an oxygen proportion of between 0.1 at% and 67 at%, and
wherein a shared total proportion of oxygen atoms, on the one hand, and of noble-metal atoms including gold atoms, on the other hand, in the second layer (150) amounts to at least 99 at%.

2. Sensor (100;200;300;500) as claimed in claim 1, wherein the second layer (150) further comprises a noble-metal material having noble-metal atoms other than gold.

3. Sensor (100;200;300;500) as claimed in claim 2, wherein the number of noble-metal atoms other than gold in the second layer (150) is at most 25 % of the number of gold atoms in the second layer (150).

4. Sensor (100;200;300;500) as claimed in any of the preceding claims, wherein an oxygen concentration of the second layer (150) comprises a gradient in a direction perpendicular to the second layer (150).

5. Sensor (100;200;300;500) as claimed in any of the preceding claims, further comprising a plurality of measurement contacts (380) having electrically conductive connections to the first layer (110), wherein the measurement contacts (380) are arranged adjacent to a main surface of the first layer (110) that faces the second layer (150).

6. Sensor (100;200;300;500) as claimed in any of the preceding claims, wherein the solid-state layered structure further comprises an electrically and/or ionically conductive intermediate layer (230) arranged between the insulation layer (120) and the second layer (150).

7. Sensor (100;200;300;500) as claimed in claim 6, wherein the intermediate layer (230) comprises a thickness of between 5 nm and 10 µm.

8. Sensor (100;200;300;500) as claimed in any of claims 6 or 7, wherein the intermediate layer (230) comprises an electrical resistance less than 100 MOhm in a direction perpendicular to the intermediate layer (230).

9. Sensor (100;200;300;500) as claimed in any of claims 1-5,
wherein the insulation layer (120) is arranged adjacent to a main surface of the first layer (110), and
wherein the second layer (150) is arranged opposite the main surface of the first layer (110), adjacent to the insulation layer (120).

10. Sensor (100;200;300;500) as claimed in any of claims 6-8,
wherein the insulation layer (120) is arranged adjacent to a main surface of the first layer (110), and
wherein the intermediate layer (230) is arranged opposite the main surface of the first layer (110), adjacent to the insulation layer (120), and
wherein the second layer (150) is arranged opposite the insulation layer (120), adjacent to the intermediate layer (230).

11. Sensor (100;200;300;500) as claimed in any of the preceding claims, wherein the sensor (100;200;300;500) further comprises a sealing structure (260),
wherein the sealing structure is arranged to spatially separate, from the first layer (110), a measurement surface (290) of the second layer (150) that faces away from the first layer (110),
wherein the sealing structure is configured to prevent ionically and/or electrically conductive contact between the measurement surface (290) and the first layer (110) by means of a liquid, and
wherein the sealing structure (260) is impermeable and resistant to acidic and/or alkaline liquids.

12. Sensor (100;200;300;500) as claimed in any of the preceding claims, wherein the sensor (100;200;300;500) further comprises an electrically conductive contact (270) electrically conductively connected to the first layer (110).

13. Sensor (100;200;300;500) as claimed in any of the preceding claims, wherein the insulation layer is configured to electrically insulate the first layer from the second layer.

14. Sensor system (5000) comprising:
the sensor (100;200;300;500) as claimed in any of the preceding claims;
an ion-sensitive sensor (501) having an ion-sensitive sensor region (591);
a measurement volume (10) adjacent to the measurement surface (290, 590) of the sensor (100;200;300;500) and the ion-sensitive sensor region (591) of the ion-sensitive sensor (501);
a grounding contact (20), the grounding contact being arranged adjacent to the measurement volume or within the measurement volume.

15. Method (1000) of producing a sensor (100;200;300;500), comprising the steps of:
providing (1100) an initial layered structure having a first layer (110) and an insulation layer (120), the first layer (110) comprising a semiconductor material;
producing (1200) a second layer (150),
such that the second layer (150) comprises a gold material and an oxygen material,
such that the second layer (150) comprises an oxygen proportion of between 0.1 at% and 67 at%,
such that the second layer (150) comprises a thickness of between 5 nm and 10 µm, and
such that the second layer (150) comprises a measurement surface (290) that faces away from the insulation layer,
such that a shared total proportion of oxygen atoms, on the one hand, and of noble-metal atoms including gold atoms, on the other hand, in the second layer (150) amounts to at least 99 at%, and
such that the second layer (150) is arranged to be separated from the first layer (110) by the insulation layer (120).

## Revendications

1. Capteur (100;200;300;500) comprenant une structure en couches à l'état solide, ladite structure comprenant les éléments suivants :
une première couche (110) comprenant un matériau semi-conducteur ;
une deuxième couche (150) comprenant un matériau à base d'or et un matériau à base d'oxygène,
une couche isolante (120) disposée entre la première couche (110) et la deuxième couche (150), la deuxième couche étant séparée de la première couche par la couche isolante,
la deuxième couche (150) présentant une surface de mesure (290) opposée à la couche isolante,
la deuxième couche (150) présentant une épaisseur comprise entre 5 nm et 10 µm,
la deuxième couche (150) présentant une proportion atomique d'oxygène comprise entre 0,1 at% et 67 at%, et
la proportion atomique totale combinée des atomes d'oxygène, d'une part, et des atomes de métal noble, incluant des atomes d'or, d'autre part, dans la deuxième couche (150), étant d'au moins 99 at%.

2. Capteur (100;200;300;500) selon la revendication 1, dans lequel la deuxième couche (150) comprend en outre un matériau à base de métal noble comprenant des atomes de métal noble autres que l'or.

3. Capteur (100;200;300;500) selon la revendication 2, dans lequel le nombre d'atomes de métal noble autres que l'or dans la deuxième couche (150) représente au maximum 25 % du nombre d'atomes d'or dans la deuxième couche (150).

4. Capteur (100;200;300;500) selon l'une quelconque des revendications précédentes, dans lequel la concentration en oxygène de la deuxième couche (150) présente un gradient dans une direction perpendiculaire à la deuxième couche (150).

5. Capteur (100;200;300;500) selon l'une quelconque des revendications précédentes, comprenant en outre une pluralité de contacts de mesure (380) qui sont reliés de manière électriquement conductrice à la première couche (110), les contacts de mesure (380) étant disposés de manière adjacente à une surface principale de la première couche (110) tournée vers la deuxième couche (150).

6. Capteur (100;200;300;500) selon l'une quelconque des revendications précédentes, dans lequel la structure en couches à l'état solide comprend en outre une couche intermédiaire (230) électriquement et/ou ioniquement conductrice, disposée entre la couche isolante (120) et la deuxième couche (150).

7. Capteur (100;200;300;500) selon la revendication 6, dans lequel la couche intermédiaire (230) présente une épaisseur comprise entre 5 nm et 10 µm.

8. Capteur (100;200;300;500) selon l'une quelconque des revendications 6 ou 7, dans lequel la couche intermédiaire (230) présente, dans une direction perpendiculaire à la couche intermédiaire (230), une résistance électrique inférieure à 100 MΩ.

9. Capteur (100;200;300;500) selon l'une quelconque des revendications 1 à 5,
dans lequel la couche isolante (120) est disposée de manière adjacente à une surface principale de la première couche (110), et
la deuxième couche (150) étant disposée, en regard de la surface principale de la première couche (110), de manière adjacente à la couche isolante (120).

10. Capteur (100;200;300;500) selon l'une quelconque des revendications 6 à 8,
dans lequel la couche isolante (120) est disposée de manière adjacente à une surface principale de la première couche (110), et
la couche intermédiaire (230) étant disposée, en regard de la surface principale de la première couche (110), de manière adjacente à la couche isolante (120), et
la deuxième couche (150) étant disposée, en regard de la couche isolante (120), de manière adjacente à la couche intermédiaire (230).

11. Capteur (100;200;300;500) selon l'une quelconque des revendications précédentes, dans lequel le capteur (100;200;300;500) comprend en outre une structure d'étanchéité (260),
la structure d'étanchéité étant agencée de telle sorte qu'elle sépare spatialement de la première couche (110) une surface de mesure (290) de la deuxième couche (150), tournée à l'opposé de la première couche (110),
la structure d'étanchéité étant configurée pour empêcher, par l'intermédiaire d'un liquide, un contact ioniquement et/ou électriquement conducteur entre la surface de mesure (290) et la première couche (110), et
la structure d'étanchéité (260) étant imperméable et résistante aux liquides acides et/ou basiques.

12. Capteur (100;200;300;500) selon l'une quelconque des revendications précédentes, dans lequel le capteur (100;200;300;500) comprend en outre un contact électriquement conducteur (270) qui est relié de manière électriquement conductrice à la première couche (110).

13. Capteur (100;200;300;500) selon l'une quelconque des revendications précédentes, dans lequel la couche isolante est configurée pour isoler électriquement la première couche de la deuxième couche.

14. Système de capteurs (5000), comprenant :
le capteur (100;200;300;500) selon l'une quelconque des revendications précédentes ;
un capteur ionosensible (501) comprenant une zone ionosensible (591) ;
un volume de mesure (10) adjacent à la surface de mesure (290, 590) du capteur (100;200;300;500) et à la zone ionosensible (591) du capteur ionosensible (501) ;
un contact de mise à la terre (20), le contact de mise à la terre étant disposé de manière adjacente au volume de mesure ou à l'intérieur du volume de mesure.

15. Procédé (1000) de fabrication d'un capteur (100;200;300;500), comprenant les étapes suivantes :
mettre à disposition (1100) une structure en couches de départ comprenant une première couche (110) et une couche isolante (120), la première couche (110) comprenant un matériau semi-conducteur ;
former (1200) une deuxième couche (150),
de sorte que la deuxième couche (150) comprenne un matériau à base d'or et un matériau à base d'oxygène,
de sorte que la deuxième couche (150) présente une proportion atomique d'oxygène comprise entre 0,1 at% et 67 at%,
de sorte que la deuxième couche (150) présente une épaisseur comprise entre 5 nm et 10 µm, et
de sorte que la deuxième couche (150) présente une surface de mesure (290) opposée à la couche isolante,
de sorte que la proportion atomique totale combinée des atomes d'oxygène, d'une part, et des atomes de métal noble, incluant des atomes d'or, d'autre part, dans la deuxième couche (150), est d'au moins 99 at%, et
de sorte que la deuxième couche (150) soit séparée de la première couche (110) par la couche isolante (120).
